(19) Europäisches Patentamt
European Patent Office
Office européen des brevets

(11) EP 0 516 018 B1

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int. Cl.[6]: **C08F 4/642**, C08F 10/00

(21) Anmeldenummer: **92108788.8**

(22) Anmeldetag: **25.05.1992**

(54) **Verfahren zur Herstellung von Polyolefinen mit breiter Molmassenverteilung**
Process for preparing olefin polymers with large molecular weight distribution
Procédé de préparation de polyoléfines à large distribution de poids moléculaire

(84) Benannte Vertragsstaaten:
**AT BE CH DE ES FR GB IT LI LU NL SE**

(30) Priorität: **27.05.1991 DE 4117259**

(43) Veröffentlichungstag der Anmeldung:
**02.12.1992 Patentblatt 1992/49**

(60) Teilanmeldung: **95114875.8**

(73) Patentinhaber: **HOECHST AKTIENGESELLSCHAFT**
**D-65926 Frankfurt am Main (DE)**

(72) Erfinder:
- **Winter, Andreas, Dr.**
  **W-6246 Glashütten 2 (DE)**
- **Dolle, Volker, Dr.**
  **W-6233 Kelkheim am Taunus (DE)**
- **Spaleck, Walter, Dr.**
  **W-6237 Liederbach (DE)**

(56) Entgegenhaltungen:
**EP-A- 0 128 045**
**EP-A- 0 128 046**
**EP-A- 0 226 463**
**EP-A- 0 310 734**
**EP-A- 0 399 348**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 516 018 B1

Printed by Rank Xerox (UK) Business Services
2.9.15/3.4

**Beschreibung**

Von Metallocenkatalysatoren in Verbindung mit Aluminoxanen ist bekannt, daß sie Olefine zu Polyolefinen mit enger Molmassenverteilung ($M_w/M_n$ von 2-3) polymerisieren können (J. Polym. Sci, Pol. Chem. Ed. 23 (1985) 2117; EP-A 302 424). Solche eng verteilten Polyolefine eignen sich beispielsweise für Anwendungen im Präzisionsspritzguß, Spritzguß allgemein und für die Faserherstellung. Für zahlreiche Anwendungen wie beispielsweise Tiefziehen, Ertrudieren, Hohlkörperblasformen sowie für die Herstellung von Polyolefinschäumen und Folien werden breitere oder bimodale Molmassenverteilungen gefordert.

Für Polyethylen wurde vorgeschlagen, solche Produkte durch Verwendung von zwei oder mehr Metallocenkatalysatoren bei der Polymerisation zu realisieren (EP-A 128 045); die beschriebenen Systeme sind jedoch achirale Katalysatoren und würden bei der Polymerisation von Propen ataktisches Polypropylen liefern. Ataktisches Polypropylen ist als Konstruktionswerkstoff jedoch ungeeignet.

Die Herstellung von Stereoblockpolypropylen mit $M_w/M_n$ von 13- 15 ist aus DE-OS 3 640 924 bekannt. Diese Katalysatorsysteme sind ebenfalls nicht geeignet, Polyolefine hoher Taktizität zu bilden. Ferner sind die bei technisch relevanten Polymerisationstemperaturen realisierbaren Aktivitäten der Metallocene und die Molmassen der Polymerprodukte zu gering. Darüberhinaus liefern die vorgeschlagenen Katalysatoren bei solchen Polymerisationstemperaturen nur ataktisches Polymer.

In der EP-A 310 734 werden Katalysatorsysteme bestehend aus einer Mischung eines Hafnocens und eines Zirkonocens zur Herstellung von Polypropylen vorgeschlagen. Die Produkte haben breite bis bimodale Verteilungen mit $M_w/M_n$ von 3,7 bis 10,3.

Unter Verwendung nur eines Hafnocenkatalysators wird bei einer bestimmten Polyerisationstemperatur gemäß EP-A 355 439 breitverteiltes Polypropylen erhalten.

Syndiotaktisches Polypropylen mit breiter Verteilung wird in der EP-A 387 691 ($M_w/M_n$ bis 6,4) bei Verwendung eines Hafnocens beschrieben.

Gemeinsame Nachteile dieser Verfahren sind die für industrielle Anwendungen zu hohen Kosten für die Hafniumkatalysatoren in Verbindung mit ihrer niedrigen Polymerisationsaktivität, die zusätzlich eine umfassende kostenintensive Reinigung des hergestellten Polymers von Katalysatorresten erforderlich macht.

Es bestand somit die Aufgabe, ein Katalysatorsystem und ein Verfahren zu finden, mittels dessen Polyolefine mit breiter, bimodaler oder multimodaler Verteilung hergestellt werden können, welches die aus dem Stand der Technik bekannten Nachteile vermeidet.

Gelöst wird die Aufgabe durch Verwendung eines Katalysatorsystems bestehend aus mindestens zwei stereorigiden Zirkonocenen und einer Aluminiumverbindung als Cokatalysator.

Die Erfindung betrifft somit ein Verfahren zur Herstellung eines Polyolefins mit einer Molmassenverteilung $M_w/M_n \geqq 3,0$, die monomodal, bimodal oder multimodal sein kann, durch Polymerisation oder Copolymerisation eines Olefins der Formel $R^aCH=CHR^b$, worin $R^a$ und $R^b$ gleich oder verschieden sind und ein Wasserstoffatom oder einen Alkylrest mit 1 bis 14 C-Atomen bedeuten, oder $R^a$ und $R^b$ mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einer Übergangsmetallkomponente (Metallocen) und einem Aluminoxan der Formel II

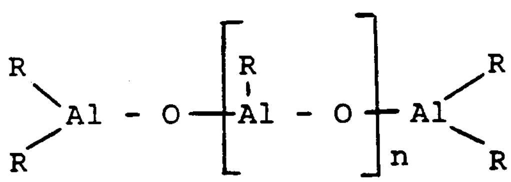

(II)

für den linearen Typ und/oder der Formel III

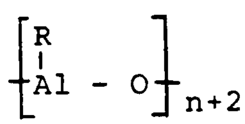

(III)

für den cyclischen Typ, wobei in den Formeln II und III die Reste R gleich oder verschieden sein können und eine $C_1$-$C_6$-Alkylgruppe, eine $C_1$-$C_6$-Fluoralkylgruppe, eine $C_6$-$C_{18}$-Arylgruppe, eine $C_1$-$C_6$-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung $AlR_3$ besteht, dadurch gekennzeichnet, daß als Übergangsmetallkomponente mindestens ein Zirkonocen der Formel I und mindestens ein Zirkonocen der Formel Ia oder alternativ mindestens 2 Zirkonocene der Formel I verwendet werden

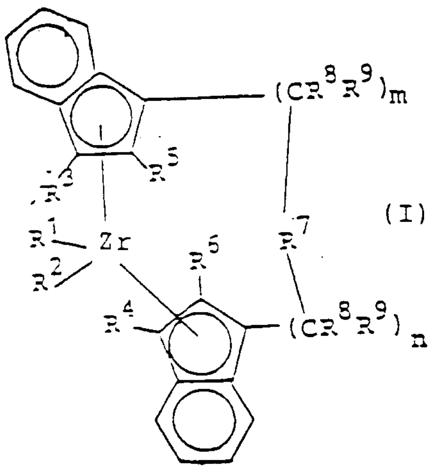

(I)

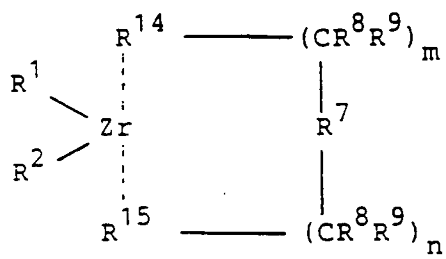

(Ia)

worin

R1 und R2 gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist,

$R^5$ und $R^6$ gleich oder verschieden sind und die für $R^3$ und $R^4$ genannte Bedeutung haben, mit der Maßgabe, daß $R^5$ und $R^6$ nicht Wasserstoff sind,

$R^7$

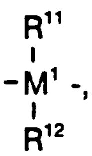 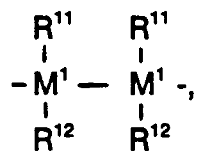 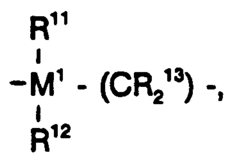 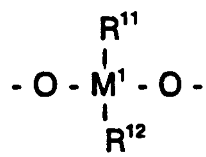

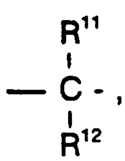 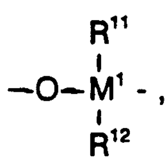

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist, wobei

$R^{11}$, $R^{12}$ und $R^{13}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkorygruppe, eine $C_2$-$C_{10}$-Alkenylgruppe, eine $C_7$-$C_{40}$-Arylalkylgruppe, eine $C_8$-$C_{40}$-

Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden und
$M^1$ Silizium, Germanium oder Zinn ist,

$R^8$ und $R^9$ gleich oder verschieden sind und die für $R^{11}$ genannte Bedeutung haben,
$R^{14}$ und $R^{15}$ gleich oder verschieden sind und einen ein- oder mehrkernigen Kohlenwasserstoffrest, welcher mit dem Zirkonatom eine Sandwichstruktur bilden kann, bedeuten und
m und n gleich oder verschieden sind und null, 1 oder 2 sind, wobei m plus n null, 1 oder 2 ist.

Alkyl steht für geradkettiges oder verzweigtes Alkyl. Halogen (halogeniert) bedeutet Fluor, Chlor, Brom oder Jod, bevorzugt Fluor oder Chlor.

$R^1$ und $R^2$ sind gleich oder verschieden und bedeuten ein Wasserstoffatom, eine $C_1$-$C_{10}$-, vorzugsweise $C_1$-$C_3$-Alkylgruppe, eine $C_1$-$C_{10}$-, vorzugsweise $C_1$-$C_3$-Alkoxygruppe, eine $C_6$-$C_{10}$-, vorzugsweise $C_6$-$C_8$-Arylgruppe, eine $C_6$-$C_{10}$-, vorzugsweise $C_6$-$C_8$-Aryloxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_7$-$C_{40}$-, vorzugsweise $C_7$-$C_{12}$-Alkylarylgruppe, eine $C_8$-$C_{40}$-, vorzugsweise $C_8$-$C_{12}$-Arylalkenylgruppe oder ein Halogenatom, vorzugsweise Chlor.

$R^3$ und $R^4$ sind gleich oder verschieden und bedeuten ein Wasserstoffatom, ein Halogenatom, bevorzugt ein Fluor-, Chlor- oder Bromatom, eine $C_1$-$C_{10}$-, vorzugsweise $C_1$-$C_4$-Alkylgruppe, die halogeniert sein kann, eine $C_6$-$C_{10}$-, vorzugsweise $C_6$-$C_8$-Arylgruppe, einen $-NR_2^{10}$, $-SR^{10}$, $-OSiR_3^{10}$, $-SiR_3^{10}$ oder $-PR_2^{10}$-Rest, worin $R^{10}$ ein Halogenatom, vorzugsweise Chloratom, oder eine $C_1$-$C_{10}$-, vorzugsweise $C_1$-$C_3$-Alkylgruppe oder $C_6$-$C_{10}$-, vorzugsweise $C_6$-$C_8$-Arylgruppe ist. Besonders bevorzugt sind $R^3$ und $R^4$ Wasserstoff.

$R^5$ und $R^6$ sind gleich oder verschieden, bevorzugt gleich, und haben die für $R^3$ und $R^4$ beschriebene Bedeutung, mit der Maßgabe, daß $R^5$ und $R^6$ nicht Wasserstoff sein dürfen. Bevorzugt sind $R^5$ und $R^6$ ($C_1$-$C_4$)-Alkyl, das halogeniert sein kann, wie Methyl, Ethyl, Propyl, Isopropyl, Butyl, Isobutyl oder Trifluormethyl, insbesondere Methyl.

$R^7$ ist

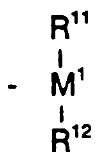 , 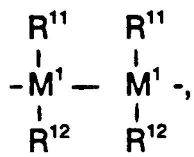 , 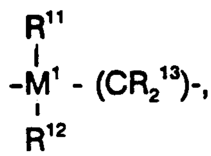 , 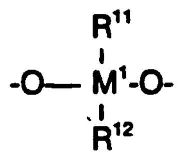 ,

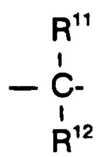 , 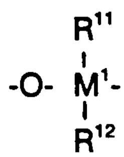

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$, wobei $R^{11}$, $R^{12}$ und $R^{13}$ gleich oder verschieden sind und ein Wasserstoffatom, ein Halogenatom, eine $C_1$-$C_{10}$-, vorzugsweise $C_1$-$C_4$-Alkylgruppe, insbesondere Methylgruppe, eine $C_1$-$C_{10}$-Fluoralkylgruppe, vorzugsweise $CF_3$-Gruppe, eine $C_6$-$C_{10}$-, vorzugsweise $C_6$-$C_8$-Arylgruppe, eine $C_6$-$C_{10}$-Fluorarylgruppe, vorzugsweise Pentafluorphenylgruppe, eine $C_1$-$C_{10}$-, vorzugsweise $C_1$-$C_4$-Alkoxygruppe, insbesondere Methoxygruppe, eine $C_2$-$C_{10}$-, vorzugsweise $C_2$-$C_4$-Alkenylgruppe, eine $C_7$-$C_{40}$-, vorzugsweise $C_7$-$C_{10}$-Arylalkylgruppe, eine $C_8$-$C_{40}$-, vorzugsweise $C_8$-$C_{12}$-Arylalkenylgruppe oder eine $C_7$-$C_{40}$-, vorzugsweise $C_7$-$C_{12}$-Alkylarylgruppe bedeuten, oder $R^{11}$ und $R^{12}$ oder $R^{11}$ und $R^{13}$ bilden jeweils zusammen mit den sie verbindenden Atomen einen Ring.

$M^1$ ist Silizium, Germanium oder Zinn, bevorzugt Silizium und Germanium.

$R^7$ ist vorzugsweise $=CR^{11}R^{12}$, $=SiR^{11}R^{12}$, $=GeR^{11}R^{12}$, -O-, -S-, =SO, $=PR^{11}$ oder $=P(O)R^{11}$.

$R^8$ und $R^9$ sind gleich oder verschieden und haben die für $R^{11}$ genannte Bedeutung.

m und n sind gleich oder verschieden und bedeuten null, 1 oder 2, bevorzugt null oder 1, wobei m plus n null, 1 oder 2, bevorzugt null oder 1 ist.

Bevorzugt sind $R^{14}$ und $R^{15}$ Fluorenyl, Indenyl und Cyclopentadienyl, wobei diese Grundkörper noch zusätzliche Substituenten in der Bedeutung von $R^{11}$ tragen können.

Somit sind die besonders bevorzugten Metallocene solche, bei denen in Formel I, $R^1$ und $R^2$ gleich oder verschieden sind und Methyl oder Chlor, $R^3$ und $R^4$ Wasserstoff, $R^5$ und $R^6$ gleich oder verschieden sind und Methyl, Ethyl oder Trifluormethyl, $R^7$ einen Rest

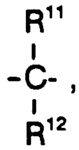 , 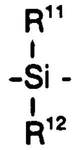

und n plus m null oder 1 bedeuten; insbesondere die in den Ausführungsbeispielen aufgeführten Verbindungen.

Unter den in den Ausführungsbeispielen genannten Verbindungen I besitzen rac-Dimethylsilyl(2-methyl-1-indenyl)$_2$zirkondichlorid, rac-Ethylen(2-methyl-1-indenyl)$_2$-zirkondichlorid, rac-Diphenylsilyl(2-methyl-1-indenyl)$_2$zirkondichlorid, rac-Methylethylen(2-methyl-1-indenyl)$_2$zirkondichlorid und rac-Phenyl(methyl)silyl(2-methyl-1-indenyl)$_2$zirkondichlorid besondere Bedeutung.

Die besonders bevorzugten Metallocene der Formel Ia sind solche bei denen $R^1$ und $R^2$ gleich oder verschieden sind und Methyl oder Chlor, $R^7$ einen Rest

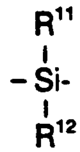 , 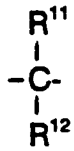 oder 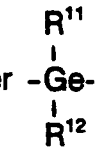 ,

n+m null oder 1 und

$R^{14}$ und $R^{15}$ gleich oder verschieden sind Fluorenyl, Indenyl oder ein substituiertes Cyclopentadienyl bedeuten, insbesondere die in den Ausführungsbeispielen aufgeführten Verbindungen Ia.

Besondere Bedeutung besitzen somit rac-Phenyl(methyl)silyl(indenyl)$_2$-zirkondichlorid, Diphenylmethylen(9-fluorenyl)(cyclopentadienyl)zirkondichlorid, Isopropyliden(9-fluorenyl)(cyclopentadienyl)zirkondichlorid, rac-Dimethylsilyl(2,3,5-trimethyl-1-cyclpentadienyl)$_2$zirkondichlorid, rac-Dimethylsilyl(indenyl)$_2$-zirkondichlorid, rac-Dimethylgermyl(indenyl)$_2$zirkondichlorid, rac-Dimethylsily(indenyl)$_2$zirkondimethyl, rac-Phenyl(vinyl)silyl(indenyl)$_2$zirkondichlorid,

rac-$H_2C-CH_2-CH_2-Si$(indenyl)$_2$zirkondichlorid,

rac-Dimethylsilyl(2,4-dimethylcyclopentadienyl)$_2$zirkondichlorid, rac-Isopropyliden(indenyl)$_2$zirkondichlorid, rac-Dimethylsilyl(2-methyl-4,5,6,7-tetrahydro-1-indenyl)$_2$zirkondichlorid, rac-Ethylen(indenyl)$_2$-zirkondichlorid, rac-Methylen(3-t-butyl-1-cyclopentadienyl)$_2$-zirkondichlorid, rac-Dimethylsilyl(4,7-dimethyl-1-indenyl)$_2$zirkondichlorid.

Die Metallocene mit $C_s$-Symmetrie (Unterfall von Verbindungen der Formel Ia; beispielsweise $R^{11}R^{12}C$(Fluorenyl)(Cyclopentadienyl)zirkondimethyl) werden zur Herstellung von syndiotaktischem Anteil im Polyolefin eingesetzt.

Der Begriff $C_s$- Symmetrie bedeutet für die Zwecke der vorliegenden Erfindung, daß die entsprechenden Metallocene senkrecht zur Ebene, die von Zr, $R^1$ und $R^2$ aufgespannt wird, eine Spiegelebene besitzen. Die Winkelhalbierende von $\measuredangle R^1$-Zr-$R^2$ verläuft in dieser Spiegelebene. Diese Symmetriebetrachtung beschränkt sich auf einen Teil des Zirconocenmoleküls, d.h. die Brücke $-(CR^8R^9)_n-R^7-(CR^8R^9)_m-$wird nicht berücksichtigt. Ferner ist der Begriff $C_s$-Symmetrie formal oder idealisiert zu verstehen. So bleiben z.B. Verschiebungen im genannten Molekülteil, die durch die Brücke hervorgerufen werden können und nur einer Strukturaufklärung zugänglich sind, für die Zwecke der vorliegenden Erfindung außer Betracht.

Die chiralen Metallocene werden als Racemat zur Herstellung von hochisotaktischen Polyolefinen eingesetzt. Verwendet werden kann aber auch die reine R- oder S-Form. Mit diesen reinen stereoisomeren Formen ist ein optisch aktives Polymeres herstellbar. Abgetrennt werden sollte jedoch die meso-Form der Metallocene, da das polymerisationsaktive Zentrum (das Metallatom) in diesen Verbindungen wegen Spiegelsymmetrie am Zentralmetall nicht mehr chiral ist und daher kein hochisotaktisches Polymeres erzeugen kann. Wird die meso-Form nicht abgetrennt, entsteht neben isotaktischen Polymeren auch ataktisches Polymer. Für bestimmte Anwendungen - weiche Formkörper beispielsweise - kann dies durchaus wünschenswert sein.

Die Trennung der Stereoisomeren ist im Prinzip bekannt.

Die Metallocene I und Ia können prinzipiell nach folgendem Reaktionsschema hergestellt werden:

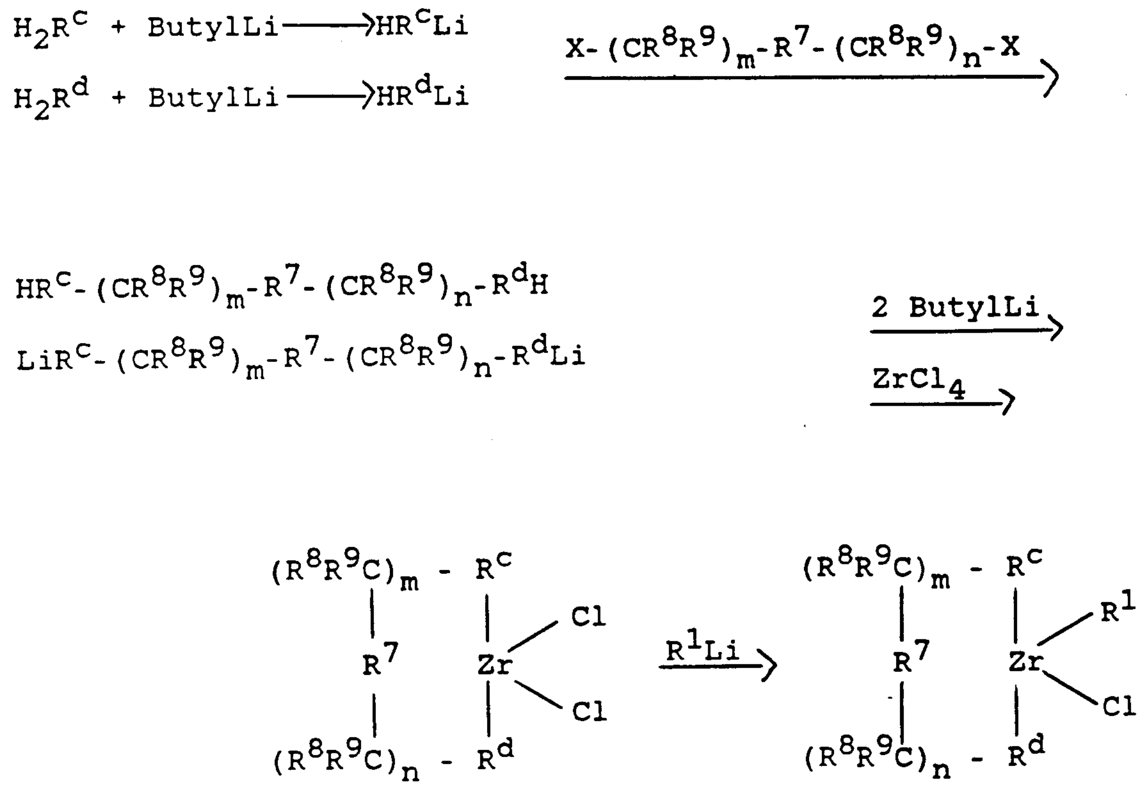

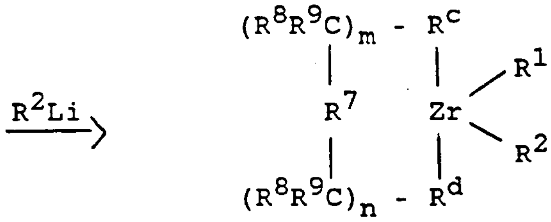


X = Cl, Br, I, O-Tosyl;

$H_2R^c$ =

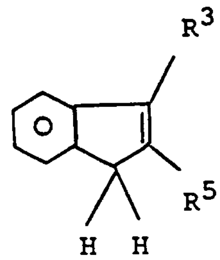

für I oder $H_2R^{14}$ für Ia

$H_2R^d$ =

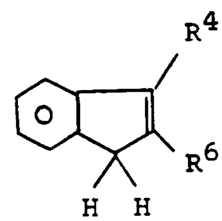

für I oder $H_2R^{15}$ für Ia

oder

$H_2R^{14}$ + BuLi ⟶ $HR^{14}Li$

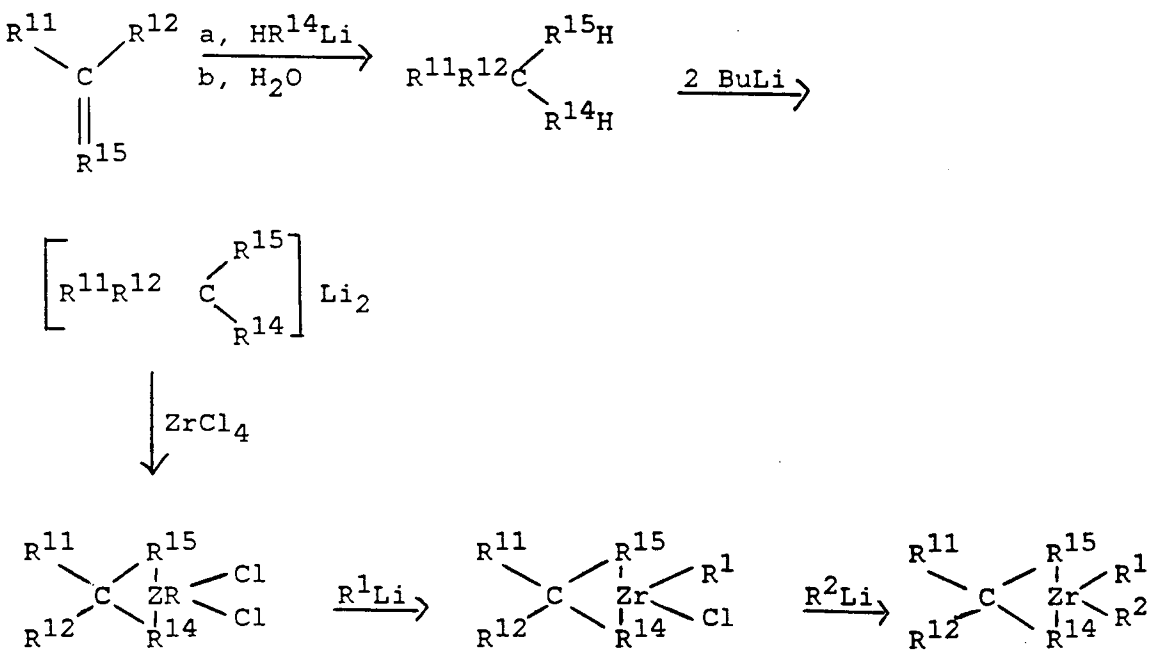


(vgl. Journal of Organomet. Chem. (1985) 63-67 und EP-A 320762)
Die Auswahl der Metallocene für die Polymerisation von Olefinen zu breit-oder mehrmodal verteiltem Polyolefin kann durch jeweils eine Testpolymerisation pro Metallocen erfolgen.

Dabei wird das Olefin zum Polyolefin polymerisiert und dessen mittleres Molekulargewicht $M_w$ sowie dessen Molmassenverteilung $M_w/M_n$ mittels Gelpermeationschromatographie bestimmt. Je nach gewünschter Molmassenverteilung werden dann die Metallocene kombiniert.

Unter Einbezug der Polymerisationsaktivitäten ist man mittels Computersimulation der kombinierten Gelpermeationskurven ohne weiteres in der Lage, über die Art der Metallocene und über das Mengenverhältnis der Metallocene untereinander, jede gewünschte Molmassenverteilung einzustellen.

Die Zahl der erfindungsgemäß zu verwendenden Zirkonocene beträgt bevorzugt 2 oder 3, insbesondere 2. Es kann jedoch auch eine größere Anzahl (wie z.B. 4 oder 5) in beliebiger Kombination von I und Ia eingesetzt werden.

Unter Einbeziehung der Polymerisationsaktivitäten und Molmassen bei unterschiedlichen Polymerisationstemperaturen, in Gegenwart von Wasserstoff als Molmassenregler oder in Gegenwart von Comonomeren, kann das Rechensimulationsmodell noch weiter verfeinert und die Anwendbarkeit des erfindungsgemäßen Verfahrens noch verbessert werden.

Als Cokatalysator wird ein Aluminoxan der Formel II und/oder III verwendet, wobei n eine ganze Zahl von 0 - 50, bevorzugt 10 - 35, bedeutet.

Bevorzugt sind die Reste R gleich und bedeuten Methyl, Isobutyl, Phenyl oder Benzyl, besonders bevorzugt Methyl.

Sind die Reste R unterschiedlich, so sind sie bevorzugt Methyl und Wasserstoff oder alternativ Methyl und Isobutyl, wobei Wasserstoff bzw. Isobutyl bevorzugt zu 0,01 - 40 % (Zahl der Reste R) enthalten sind. Statt des Aluminoxans kann bei der Polymerisation als Cokatalysator eine Mischung bestehend aus Aluminoxan und $AlR_3$ verwendet werden, wobei R die oben angeführte Bedeutung hat.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden - beispielsweise als Kristallwasser) in einem inerten Lösungsmittel (wie z.B. Toluol) umgesetzt wird. Zur Herstellung eines Aluminoxans mit verschiedenen Alkylgruppen R werden entsprechend der gewünschten Zusammensetzung zwei verschiedene Aluminiumtrialkyle ($AlR_3$ + $AlR'_3$) mit Wasser umgesetzt (vgl. S. Pasynkiewicz, Polyhedron 9 (1990) 429 und EP-A 302 424).

Die genaue Struktur der Aluminoxane II und III ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt, gemeinsam.

Es ist möglich, die Metallocene vor dem Einsatz in der Polymerisationsreaktion jeweils getrennt oder zusammen als Mischung mit einem Aluminoxan der Formel (II) und/oder (III) vorzuaktivieren. Dadurch wird die Polymerisationsaktivität deutlich erhöht und die Kornmorphologie verbessert.

Die Voraktivierung der Metallocene wird in Lösung vorgenommen. Bevorzugt werden dabei die Metallocene als Feststoff in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol oder ein $C_6$-$C_{10}$-Kohlenwasserstoff verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Die Metallocene können in der gleichen Konzentration eingesetzt werden, vorzugsweise werden sie jedoch in einer Menge von $10^{-4}$ - 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78°C bis 100°C, vorzugsweise 0 bis 70°C.

Die Metallocene können auch vorpolymerisiert oder auf einen Träger aufgebracht werden. Zur Vorpolymerisation wird bevorzugt das (oder eines der) in der Polymerisation eingesetzte(n) Olefin(e) verwendet.

Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben eines Aluminoxans eine salzartige Verbindung der Formel $R_xNH_{4-x}BR'_4$ oder der Formel $R_3PHBR'_4$ als Cokatalysator verwendet. Dabei sind x= 1,2 oder 3, R= Alkyl oder Aryl, gleich oder verschieden, und R'= Aryl, das auch fluoriert oder teilfluoriert sein kann. In diesem Fall besteht der Katalysator aus dem Reaktionsprodukt der Metallocene mit einer der genannten Verbindungen (vgl. EP-A 277 004).

Zur Entfernung von im Olefin vorhandener Katalysatorgifte ist eine Reinigung mit einem Aluminiumalkyl, beispielsweise $AlMe_3$ oder $AlEt_3$ vorteilhaft. Diese Reinigung kann sowohl im Polymerisationssystem selbst erfolgen, oder das Olefin wird vor der Zugabe in das Polymerisationssystem mit der Al-Verbindung in Kontakt gebracht und anschließend wieder abgetrennt.

Die Polymerisation oder Copolymerisation wird in bekannter Weise in Lösung, in Suspension oder in der Gasphase, kontinuierlich oder diskontinuierlich, ein-oder mehrstufig bei einer Temperatur von -60 bis 200°C, vorzugsweise 20 bis 80°C, durchgeführt. Polymerisiert oder copolymerisiert werden Olefine der Formel $R^a$-CH=CH-$R^b$. In dieser Formel sind $R^a$ und $R^b$ gleich oder verschieden und bedeuten ein Wasserstoffatom oder einen Alkylrest mit 1 bis 14 C-Atomen. $R^a$ und $R^b$ können jedoch auch mit den sie verbindenden C-Atomen einen Ring bilden. Beispiele für solche Olefine sind

Ethylen, Propylen, 1-Buten, 1-Hexen, 4-Methyl-1-penten, 1-Octen, Norbornen oder Norbornadien. Insbesondere werden Propylen und Ethylen polymerisiert.

Als Molmassenregler wird, falls erforderlich, Wasserstoff zugegeben. Unterschiedliche Wasserstoffansprechbarkeit der Metallocene, sowie die Möglichkeit, die Wasserstoffmenge während der Polymerisation zu verändern kann zu einer weiteren gewünschten Verbreiterung der Molmassenverteilung führen.

Der Gesamtdruck im Polymerisationssystem beträgt 0,5 bis 100 bar. Bevorzugt ist die Polymerisation in dem technisch besonders interessanten Druckbereich von 5 bis 64 bar.

Dabei werden normalerweise die Metallocene in einer Konzentration, bezogen auf das Übergangsmetall, von $10^{-3}$ bis $10^{-8}$, vorzugsweise $10^{-4}$ bis $10^{-7}$ mol Übergangsmetall pro $dm^3$ Lösemittel bzw. pro $dm^3$ Reaktorvolumen angewendet. Das Aluminiumoxan oder die Mischung Aluminoxan/$AlR_3$ wird normalerweise in einer Konzentration von $10^{-5}$ bis $10^{-1}$ mol, vorzugsweise $10^{-4}$ bis $10^{-2}$ mol pro $dm^3$ Lösemittel bzw. pro $dm^3$ Reaktorvolumen verwendet. Prinzipiell sind aber auch höhere Konzentrationen möglich.

Wenn die Polymerisation als Suspensions- oder Lösungspolymerisation durchgeführt wird, wird ein für das Ziegler-Niederdruckverfahren gebräuchliches inertes Lösemittel verwendet. Beispielsweise arbeitet man in einem aliphatischen oder cycloaliphatischen Kohlenwasserstoff, als solcher sei beispielsweise Butan, Pentan, Hexan, Heptan, Decan, Isooctan, Cyclohexan, Methylcyclohexan, genannt. Weiterhin kann eine Benzin- bzw. hydrierte Dieselölfraktion benutzt werden. Brauchbar ist auch Toluol. Bevorzugt wird im flüssigen Monomeren polymerisiert.

Werden inerte Lösemittel verwendet, werden die Monomeren gasförmig oder flüssig zudosiert.

Die Dauer der Polymerisation ist beliebig, da das erfindungsgemäß zu verwendende Katalysatorsystem einen nur geringen zeitabhängigen Abfall der Polymerisationsaktivität zeigt.

Das erfindungsgemäße Verfahren zeichnet sich dadurch aus, daß die beschriebenen Metallocene im technisch interessanten Temperaturbereich zwischen 20 und 80°C mit hoher Polymerisationsaktivität Polymere mit breiter, bimodaler oder multimodaler Molmassenverteilung, hoher Molmasse, hoher Stereospezifität und guter Kornmorphologie erzeugen.

Die erfindungsgemäßen Polymere eignen sich besonders gut zur Herstellung von Folien, insbesondere transparenter Folien, Tiefziehanwendungen, Polyolefinschäume, Extrusionsanwendungen sowie für die Herstellung transparenter Hohlkörper und für das Hohlkörperblasformen allgemein.

Die nachfolgenden Beispiele sollen die Erfindung näher erläutern.

Es bedeuten

VZ = Viskositätszahl in $cm^3/g$

$M_w$ = Molmassengewichtsmittel in g/mol } ermittelt durch Gelpermeationschromatographie
$M_w/M_n$ = Molmassendispersität }

II = Isotaktischer Index (mm + 1/2 mr) } ermittelt durch $^{13}C$-NMR-Spektroskopie
SI = Syndiotaktischer Index (rr + 1/2 mr) }

MFI (230/5) = Schmelzindex, gemessen nach DIN 53735; 230°C Schmelzetemperatur und 5 kg Belastungsgewicht.

Beispiel 1

Ein trockener 24-$dm^3$-Reaktor wurde mit Stickstoff gespült und mit 12 $dm^3$ flüssigem Propylen befüllt. Dann wurden 39 $cm^3$ toluolische Methylaluminoxanlösung (entsprechend 52 mmol Al, mittlerer Oligomerisierungsgrad des Methylaluminoxans war n = 19) zugegeben, und der Ansatz wurde 15 Minuten bei 30°C gerührt.

Parallel dazu wurden 13,5 mg (0,025 mmol) rac-Phenyl(methyl)silyl(2-methyl-1-indenyl)$_2$zirkondichlorid und 51,0 mg (0,10 mmol) rac-Phenyl(methyl)silyl(1-indenyl)zirkondichlorid in 15 $cm^3$ toluolischer Methylaluminoxanlösung (20 mmol) aufgelöst und nach 15 Minuten in den Reaktor gegeben.

Bei 30°C wurden 3 h polymerisiert. Beendet wurde die Polymerisation durch Zugabe von 12 l $CO_2$-Gas. Es wurden 1,85 kg Polypropylen, entsprechend einer Aktivität der Metallocenmischung von 9,6 kg PP/g Metallocen x h, erhalten. VZ = 331 $cm^3/g$; $M_w$ = 411000 g/mol, $M_w/M_n$ = 8,5; II = 96,9 %.

Beispiel 2

Beispiel 1 wurde wiederholt, als Metallocenmischkomponente wurden jedoch 11,2 mg (0,025 mmol) rac-Ethylen-(2-methyl-1-indenyl)$_2$zirkondichlorid und 13,9 mg (0,025 mmol) Diphenylmethylen(9-fluorenyl)(cyclopentadienyl)zirkondichlorid eingesetzt; die Polymerisationstemperatur betrug 60°C und die Polymerisationszeit war 1 h.

Es wurden 2,45 kg Polypropylen, entsprechend einer Aktivität der Metallocenmischung von 97.6 kg PP/g Metallocen x h, erhalten. VZ = 255 $cm^3$/g; $M_w$ = 385000 g/mol, $M_wM_n$ = 7,5.
Durch Fraktionierung ließ sich das erhaltene Polymer in eine Fraktion isotaktisches Polypropylen (II > 96 %) und eine Fraktion syndiotaktisches Polypropylen (SI > 96 %) auftrennen. Das Mengenverhältnis betrug etwa 1:1.

Beispiel 3

Beispiel 1 wurde wiederholt, als Metallocenmischungskomponente wurden jedoch 5,4 mg (0,010 mmol) rac-Phenyl(methyl)silyl(2-methyl-1-indenyl)$_2$zirkondichlorrid und 5,4 mg (0,013 mmol) Dimethylmethylen(9-fluorenyl)(cyclopentadienyl)zirkondichlorid eingesetzt, die Polymerisationstemperatur war 70°C, und die Polymerisationszeit betrug 1 h.

Es wurden 2,2 kg einer Mischung aus etwa zwei Teilen isotaktischem und einemTeil syndiotaktischem Polypropylen, entsprechend einer Aktivität der Metallmischung von 203,7 kg PP/g Metallocen x h, erhalten. VZ = 172 $cm^3$/g; $M_w$ = 186500 g/mol, $M_w/M_n$ = 3,0.

Beispiel 4

Beispiel 1 wurde wiederholt, als Metallocenmischungskomponenten wurden jedoch 4,8 mg (0,01 mmol) rac-$Me_2Si$(2-methyl-1-indenyl)$_2$zirkondichlorid und 21,2 mg (0,05 mmol) rac-$Me_2Si$(2,3,5-trimethylcyclopentadienyl)$_2$zirkondichlorid eingesetzt und die Polymerisationstemperatur betrug 50 °C.

Es wurden 2,57 kg Polypropylen, entsprechend einer Aktivität der Metallocenmischung von 32,9 kg PP/g Metallocen x h, erhalten. VZ = 194 $cm^3$/g; $M_w$ = 261000 g/mol, $M_w/M_n$ = 7,9, II = 98,5%.

Beispiel 5

Beispiel 1 wurde wiederholt, als Metallocenmischungskomponente wurden jedoch 4,5 mg (0,008 mmol) rac-Phenyl(methyl)silyl(2-methyl-1-indenyl)$_2$zirkondichlorid und 6,6 mg (0,015 mmol) rac-Dimethylsilyl(indenyl)$_2$zirkondichlorid eingesetzt. Die Polymerisationszeit war eine Stunde, und die Polymerisationstemperatur betrug 50°C.

Es wurden 1,35 kg Polypropylen, entsprechend einer Aktivität der Metallocenmischung von 121,6 kg PP/g Metallocen x h erhalten. VZ = 154 $cm^3$/g; $M_w$ = 133000 g/mol, $M_w/M_n$ = 5,2, II = 96,0 %.

Beispiel 6

Beispiel 1 wurde wiederholt, als Metallocenmischungskomponenten wurden jedoch 2,4 mg (0,005 mmol) rac-Dimethylsilyl(2-methyl-1-indenyl)$_2$zirkondichlorid und 2,5 mg (0,005 mmol) rac-Dimethylgermyl(indenyl)$_2$zirkondichlorid verwendet. Die beiden Metallocene wurden getrennt in jeweils 7,5 $cm^3$ toluolischer Methylaluminoxanlösung aufgelöst, nach 15 Minuten wurden diese Lösungen in das Polymerisationssystem eindosiert. Es wurde bei 70°C 1 h polymerisiert.

Es wurden 1,57 kg Polypropylen, entsprechend einer Aktivität des Metallocensystems von 320,4 kg PP/g Metallocen x h erhalten. VZ = 105 $cm^3$/g; $M_w$ = 114000 g/mol, $M_w/M_n$ = 4,1, II = 96,3 %.

Beispiel 7

Beispiel 6 wurde wiederholt, als Metallocene wurden jedoch 4,8 mg (0,01 mmol) rac-Dimethylsilyl(2-methyl-1-indenyl)$_2$zirkondichlorid und 1,5 mg (0,004 mmol) rac-Dimethylsilyl(indenyl)$_2$zirkondimethyl verwendet.

Es wurden 2,08 kg Polypropylen, entsprechend einer Aktivität des Metallocensystems von 330,2 kg PP/g Metallocen x h erhalten. VZ = 121 $cm^3$/g; $M_w$ = 101900 g/mol, $M_w/M_n$ = 4,0, II = 96,0 %.

Beispiel 8

Beispiel 6 wurde wiederholt, als Metallocene wurden jedoch 2,7 mg (0,005 mmol) rac-Phenyl(methyl)silyl(2-methyl-1-indenyl)$_2$zirkondichlorid und 20,5 mg (0,04 mmol) rac-Phenyl(vinyl)silyl(indenyl)$_2$zikrondichlorid verwendet.

Es wurden 2,17 kg Polypropylen, entsprechend einer Aktivität des Metallocensystems von 93,5 kg PP/g Metallocen x h erhalten. VZ = 102 $cm^3$/g; $M_w$ = 79400 g/mol, $M_w/M_n$ = 3,3, II = 96,9 %.

Beispiel 9

Beispiel 6 wurde wiederholt, als Metallocene wurden jedoch 4,8 mg (0,01 mmol) rac-Dimethylsily(2-methyl-1-indenyl)$_2$zirkondichlorid und 9,2 mg (0,02 mmol)

$$\text{rac-}H_2\overline{C\text{-}CH_2\text{-}CH_2\text{-}Si}\text{(indenyl)}_2\text{zirkondichlorid}$$

verwendet.

Es wurden 1,82 kg Polypropylen, entsprechend einer Aktivität des Metallocensystems von 130 kg PP/g Metallocen erhalten.

VZ = 145 $cm^3$/g; $M_w$ = 185500 g/mol, $M_w/M_n$ = 3,6, II = 96,8 %.

Beispiel 10

Beispiel 6 wurde wiederholt, als Metallocene wurden jedoch 2,7 mg (0,005 mmol) rac-Phenyl(methyl)silyl(2-methyl-1-indenyl)$_2$zirkondichlorid und 2,4 mg (0,006 mmol) rac-Dimethylsilyl(2,4-dimethylcyclopentadienyl)$_2$zirkondichlorid verwendet.

Es wurden 1,31 kg Polypropylen, entsprechend einer Aktivität des Metallocensystems von 256,9 kg PP/g Metallocen x h erhalten.

VZ = 118 $cm^3$/g; $M_w$ = 129500 g/mol, $M_w/M_n$ = 3,8, II = 98,0 %.

Beispiel 11

Beispiel 1 wurde wiederholt, als Metallocene wurden jedoch 26,9 mg (0,05 mmol) rac-Phenyl(methyl)silyl(2-methyl-1-indenyl)$_2$zirkondichlorid und 32,5 mg (0,08 mmol) rac-Dimethylsilyl(2,4-dimethylcyclopentadienyl)$_2$zirkondichlorid verwendet. Die Polymerisationszeit war 2 h. Es wurden 2,32 kg Polypropylen, entsprechend einer Aktivität des Metallocensystems von 19,5 kg PP/g Metallocen x h, erhalten.

VZ = 386 $cm^3$/g; $M_w$ = 436000 g/mol, $M_w/M_n$ = 7,2, II = 98,5 %.

Beispiel 12

Beispiel 1 wurde wiederholt, als Metallocene wurden jedoch 9,2 mg (0,02 mmol) rac-Methylethylen(2-methyl-1-indenyl)$_2$zirkondichlorid und 8,6 mg (0,02 mmol) rac-Dimethylmethylen(1-indenyl)$_2$zirkondichlorid verwendet und die Polymerisationstemperatur betrug 50°C. Es wurden 1,42 kg Polypropylen, entsprechend einer Aktivität des Metallocensystems von 26,6 kg PP/g Metallocen x h erhalten.

VZ = 101 $cm^3$/g; $M_w$ = 123000 g/mol, $M_w/M_n$ = 8,5, II = 91,6 %.

Beispiel 13

Ein trockener 24-$dm^3$-Reaktor wurde mit Stickstoff gespült und mit 24 N $dm^3$ Wasserstoff sowie 12 $dm^3$ flüssigem Propylen befüllt.

Dann wurden 10 ml einer toluolischen Trimethylaluminiumlösung (entsprechend 26 mmol $AlMe_3$) zugegeben und der Ansatz 15 Minuten bei 40°C gerührt.

Parallel dazu wurden 5,4 mg (0,01 mmol) rac-Phenyl(methyl)silyl(2-methyl-1-indenyl)$_2$zirkondichlorid und 4,9 mg (0,01 mmol) rac-Dimethylgermyl(indenyl)$_2$zirkondichlorid in 15 $cm^3$ Methylaluminoxanlösung (20 mmol Al, Toluol) aufgelöst und nach 15 Minuten in den Reaktor gegeben. Der Reaktorinhalt wurde in 3 Minuten auf 65°C gebracht und bei dieser Temperatur wurde eine Stunde polymerisiert.

Durch Zugabe von 12 l $CO_2$-Gas wurde die Polymerisation gestoppt, überschüssiges Propylen abgegast und das Polymerpulver bei 80°C/100 mbar getrocknet.

Es wurden 2,25 kg Polypropylen, entsprechend einer Aktivität der Metallocenmischung von 218,5 kg PP/g Metallocen x h erhalten.

VZ = 91 $cm^3$/g; $M_w$ = 72800 g/mol, $M_w/M_n$ = 4,6, II = 96,8 %.

Beispiel 14

Beispiel 1 wurde wiederholt, als Metallocene wurden jedoch 5,4 mg (0,010 mmol) rac-Phenyl(methyl)silyl(2-methyl-1-indenyl)$_2$zirkondichlorid und 27,0 mg (0,056 mmol) rac-Dimethylsilyl(2-methyl-4,5,6,7-tetrahydro-1-indenyl)$_2$zirkondichlorid verwendet und die Polymerisationstemperatur war 50°C, die Polymerisationszeit 1,5 h.

Es wurden 1,51 kg Polypropylen, entsprechend einer Aktivität des Metallocensystems von 31,1 kg PP/g Metallocen x h erhalten.
VZ = 187 cm$^3$/g; $M_w$ = 132500 g/mol, $M_w/M_n$ = 4,1, II = 97,6 %.

Beispiel 15

Beispiel 1 wurde wiederholt, als Metallocene wurden jedoch 4,8 mg (0,010 mmol) rac-Dimethylsilyl(2-methyl-1-indenyl)$_2$zirkondichlorid und 7,0 mg (0,017 mmol) rac-Ethylen(1-indenyl)$_2$zirkondichlorid verwendet. Die Polymerisationstemperatur war 50°C und die Polymerisationsdauer 1 h.

Es wurden 1,50 kg Polypropylen, entsprechend einer Aktivität des Metallocensystems von 127,1 kg PP/g Metallocen x h erhalten.
VZ = 125 cm$^3$/g; $M_w$ = 129500 g/mol, $M_w/M_n$ = 5,3, II = 95,4 %.

Beispiel 16

Beispiel 1 wurde wiederholt, als Metallocene wurden jedoch 6,0 mg (0,010 mmol) rac-Diphenylsilyl(2-methyl-1-indenyl)$_2$zirkondichlorid, 6,0 mg (0,013 mmol) rac-Dimethylsilyl(1-indenyl)$_2$zirkondichlorid und 36,0 mg (0,083 mmol) rac-Dimethylsilyl(2,3,5-trimethylcyclopentadienyl)$_2$zirkondichlorid verwendet, die Polymerisationstemperatur betrug 40°C und die Polymerisationsdauer war 2 h.

Es wurden 1,79 kg Polypropylen, entsprechend einer Aktivität des Metallocensystems von 18,6 kg PP/g Metallocen x h erhalten.
VZ = 267 cm$^3$/g; $M_w$ = 293000 g/mol, $M_w/M_n$ = 5,7, II = 98,0 %, MFI (230/5) = 24,6 dgmin$^{-1}$.

Beispiel 17

Ein trockener 24-dm$^3$-Reaktor wurde mit Propylen gespült und mit 12 dm$^3$ flüssigem Propylen sowie mit 20 ml einer toluolischen Trimethylaluminiumlösung (entsprechend 52 mmol $AlMe_3$) befüllt. Der Ansatz wurde bei 30°C 15 Minuten gerührt.

Parallel dazu wurden 3,0 mg (0,005 mmol) rac-Diphenylsilyl(2-methyl-1-indenyl)$_2$zirkondichlorid, 2,0 mg (0,004 mmol) rac-Dimethylsilyl(2-methyl-1-indenyl)$_2$zirkondichlorid und 2,0 mg (0,004 mmol) rac-Dimethylgermyl(1-indenyl)$_2$zirkondichlorid in 20 cm$^3$ Methylaluminoxanlösung (27 mmol Al, Toluol) aufgelöst und nach 15 Minuten in den Reaktor gegeben.
Bei 65°C wurde 1,5 h polymerisiert.

Es wurden 1,59 kg Polypropylen, entsprechend einer Aktivität des Metallocensystems von 151,4 kg PP/g Metallocen x h erhalten.
VZ = 153 cm$^3$/g; $M_w$ = 195000 g/mol, $M_w/M_n$ = 5,8, II = 96,0%, MFI (230/5) = 87 dgmin$^{-1}$.

Beispiel 18

Beispiel 1 wurde wiederholt, als Metallocene wurden jedoch 6,0 mg (0,01 mmol) rac-Diphenylsilyl(2-methyl-1-indenyl)$_2$zirkondichlorid und 45,0 mg (0,108 mmol) rac-Methylen(3-t-butyl-1-cyclopentadienyl)$_2$zirkondichlorid verwendet, die Polymerisationstemperatur war 40°C und die Polymerisationsdauer 4 h.

Es wurden 1,63 kg Polypropylen, entsprechend einer Aktivität des Metallocensystems von 8,0 kg PP/g Metallocen x h erhalten.
VZ = 358 cm$^3$/g; $M_w$ = 354000 g/mol, $M_w/M_n$ = 12,5, II = 93,5 %.

Beispiel 19

Beispiel 1 wurde wiederholt, als Metallocene wurden jedoch 6,0 mg (0,010 mmol) rac-Diphenylsilyl(2-methyl-1-indenyl)$_2$zirkondichlorid und 6,0 mg (0,012 mmol) rac-Dimethylsilyl(4,7-dimethyl-1-indenyl)$_2$zirkondichlorid verwendet, die Polymerisationstemperatur war 40°C, die Polymerisationsdauer 2 h.

Es wurden 0,85 kg Polypropylen, entsprechend einer Aktivität des Metallocensystems von 35,4 kg PP/g Metallocen x h erhalten.
VZ = 324 cm$^3$/g; $M_w$ = 352500 g/mol, $M_w/M_n$ = 15,5, II = 95,3 %.

Beispiel 20

Beispiel 1 wurde wiederholt, als Metallocene wurden jedoch 6,0 mg (0,010 mmol) rac-Diphenylsilyl(2-methyl-1-indenyl)$_2$zirkondichlorid und 7,2 mg (0,016 mmol) rac-Ethylen(2-methyl-1-indenyl)$_2$zirkondichlorid verwendet. Die Polymerisationstemperatur war 50°C, die Polymerisationsdauer 2 h.

Es wurden 1,44 kg Polypropylen, entsprechend einer Aktivität des Metallocensystems von 54,6 kg PP/g Metallocen x h erhalten.

VZ = 227 $cm^3$/g; $M_w$ = 406000 g/mol, $M_w/M_n$ = 8,0, II = 97,1 %.

Beispiel 21

Beispiel 20 wurde wiederholt, zusätzlich wurden jedoch während der Polymerisation kontinuierlich 75 g Ethylen zudosiert. Die Polymerisationstemperatur war 60°C und die Polymerisationszeit 1 h.

Es wurden 1,65 kg Ethylen-Propylen-Copolymer, entsprechend einer Aktivität des Metallocensystems von 125,0 kg Copolymer/g Metallocen x h erhalten.

VZ = 291 $cm^3$/g; $M_w$ = 387000 g/mol, $M_w/M_n$ = 7,4; 4,2 % Ethylengehalt mit überwiegend isoliert eingebauten Ethyleneinheiten ($^{13}$C-NMR-Analyse).

Beispiel 22

Beispiel 21 wurde wiederholt, 300 g Ethylen wurden jedoch erst nach 30 Minuten Polymerisationszeit zugegeben.

Es wurden 1,49 kg Copolymer erhalten, entsprechend einer Aktivität des Metallocensystems von 112,9 kg Copolymer/g Metallocen x h.

VZ = 357 $cm^3$/g; $M_w$ = 449000 g/mol, $M_w/M_n$ = 8,8. Das Polymerprodukt läßt sich durch Fraktionierung (Dekan, Diethylether) in einen Polypropylenanteil und einen Ethylen-Propylen-Kautschukanteil auftrennen. Ethylengehalt des Copolymers 18,4 %.

Beispiel 23

Ein trockener 150 $dm^3$-Reaktor wurde mit Stickstoff gespült und bei 20°C mit 80 $dm^3$ eines entaromatisierten Benzinschniffes mit dem Siedebereich 100-120°C gefüllt. Dann wurde der Gasraum durch 5-maliges Aufdrücken von 2 bar Propylen und Entspannen stickstofffrei gespült.

Nach Zugabe von 50 l flüssigem Propylen wurden 64 $cm^3$ toluolische Methylaluminoxanlösung (entsprechend 100 mmol Al, Molmasse nach kryoskopischer Bestimmung 990 g/mol) zugegeben und der Reaktorinhalt auf 50°C aufgeheizt.

Durch Zudosierung von Wasserstoff wurde ein Wasserstoffgehalt im Gasraum des Reaktors von 0,1 % eingestellt und später dann durch Nachdosierung während der gesamten Polymerisationszeit gehalten (Überprüfung on-Line durch Gaschromatographie).

15,3 mg rac-Methylethylen(2-methyl-1-indenyl)$_2$zirkondichlorid (0,033 mmol), 6,3 mg rac-Phenyl(Methyl)silyl(2-methyl-1-indenyl)$_2$zirkondichlorid (0,012 mmol) und 7,0 mg rac-Diphenylsilyl(2-methyl-1-indenyl)$_2$zirkondichlorid (0,012 mmol) wurden in 32 ml toluolischer Methylaluminoxanlösung (entsprechend 50 mmol Al) gelöst und nach 15 Minuten in den Reaktor gegeben.

Durch Kühlung wurde der Reaktor 7 h bei 50°C Polymerisationstemperatur gehalten, dann wurde durch Zugabe von 2 bar$CO_2$-Gas die Polymerisation gestoppt und das gebildete Polymere auf einer Drucknutsche vom Suspensionsmedium abgetrennt. Die Trocknung des Produktes erfolgte 24 h bei 80°C/200 mbar. Es wurden 16,4 kg Polymerpulver, entsprechend einer Metallocenaktivität von 81,9 kgPP/g Metallocen x h erhalten.

VZ = 206 $cm^3$/g; $M_w$ = 248 000 g/mol; $M_w/M_n$ = 3,4

II = 97,9 %; MFI (230/5) = 32 g/10 min, Schmp.: 151°C

Das Produkt wies folgende mechanische Daten auf:

Zug-E-Modul (nach DIN 53457-Z) 1430 $Nmm^{-2}$; Kerbschlagzähigkeit ($a_{kv}$ nach DIN 53453) bei 23°C 5$mJmm^{-2}$; Jzod-Schlagzähigkeit (nach ISO 180/1 C) bei 23°C 69 $mJmm^{-2}$ und bei -30°C 12 $mJmm^{-2}$; Jzod-Kerbschlagzähigkeit (nach ISO 180/1 A) bei 23°C 3 $mJmm^{-2}$ und bei -30°C 2 $mJmm^{-2}$; Kugeldruckhärte (Preßkörper, getempert, 358 N) 84 $Nmm^{-2}$ und Kugeldruckhärte (Spritzkörper, 358 N, nach DIN 53456) 75 $Nmm^{-2}$.

Beispiel 24

Beispiel 23 wurde wiederholt, die Metallocenmischung bestand jedoch aus 6,3 mg rac-Phenyl(Methyl)silyl(2-methyl-1-indenyl)$_2$-zirkondichlorid (0,012 mmol) und 2,9 mg rac-Dimethylsilyl(1-indenyl)$_2$zirkondichlorid (0,006 mmol). Für die Polymerisation wurde kein Wasserstoff verwendet.

Nach 20 h wurde die Polymerisation beendet.

Es wurden 18,7 kg Polymerpulver, entsprechend einer Metallocenaktivität von 101,6 kgPP/g Metallocen x h erhalten.
VZ = 202 $cm^3/g$; $M_w$ = 296 000 g/mol, $M_w/M_n$ = 7,9; II = 96,4 %;
MFI (230/5) = 39 g/10 min; Schmp. = 148°C.
Das Produkt wies folgende mechanische Daten auf:
Zug-E-Modul (nach DIN 5347-Z) 1280 $Nmm^{-2}$; Kerbschlagzähigkeit ($a_{kv}$ nach DIN 53453) bei 23°C 3 $mJmm^{-2}$; Jzod-Schlagzähigkeit (nach ISO 180/1 C) bei 23°C 65 $mJmm^{-2}$ und bei -30°C 11 $mJmm^{-2}$; Jzod-Kerbschlagzähigkeit (nach ISO 180/1 A) bei 23°C 3 $mJmm^{-2}$ und bei -30°C 2 $mJmm^{-2}$; Kugeldruckhärten 77 $Nmm^{-2}$ (Preßkörper, getempert, 358 N) und 71 $Nmm^{-2}$ (Spritzkörper, 358 N, nach DIN 53 456).

## Patentansprüche

1. Verfahren zur Herstellung eines Polyolefins mit einer Molmassenverteilung $M_w/M_n \geqq 3,0$, die monomodal, bimodal oder multimodal sein kann, durch Polymerisation oder Copolymerisation eines Olefins der Formel $R^aCH=CHR^b$, worin $R^a$ und $R^b$ gleich oder verschieden sind und ein Wasserstoffatom oder einen Alkylrest mit 1 bis 14 C-Atomen bedeuten, oder $R^a$ und $R^b$ mit den sie verbindenden Atomen einen Ring bilden können, bei einer Temperatur von -60 bis 200°C, bei einem Druck von 0,5 bis 100 bar, in Lösung, in Suspension oder in der Gasphase, in Gegenwart eines Katalysators, welcher aus einer Übergangsmetallkomponente (Metallocen) und einem Aluminoxan der Formel II

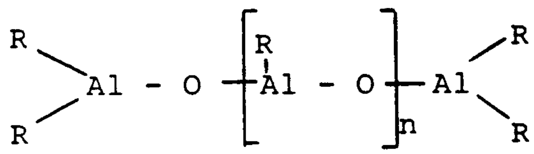

(II)

für den linearen Typ und/oder der Formel III

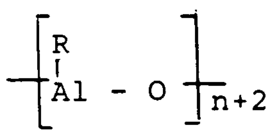

(III)

für den cyclischen Typ, wobei in den Formeln II und III die Reste R gleich oder verschieden sein können und eine $C_1$-$C_6$-Alkylgruppe, eine $C_1$-$C_6$-Fluoralkylgruppe, eine $C_6$-$C_{18}$-Arylgruppe, eine $C_1$-$C_6$-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung $AlR_3$ besteht, dadurch gekennzeichnet, daß als Übergangsmetallkomponente mindestens ein Zirkonocen der Formel I und mindestens ein Zirkonocen der Formel Ia oder alternativ mindestens 2 Zirkonocene

der Formel I verwendet werden

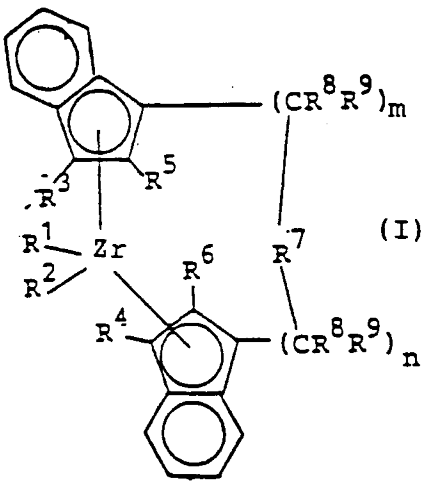

(I),

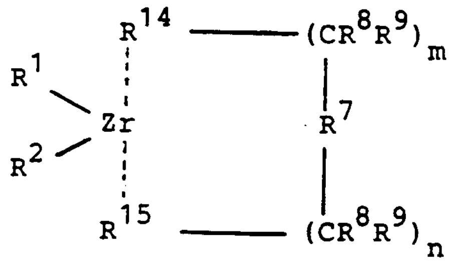

(Ia),

worin

$R^1$ und $R^2$ gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten,

$R^3$ und $R^4$ gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist,

$R^5$ und $R^6$ gleich oder verschieden sind und die für $R^3$ und $R^4$ genannte Bedeutung haben, mit der Maßgabe, daß $R^5$ und $R^6$ nicht Wasserstoff sind,

$R^7$

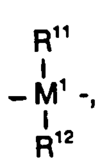

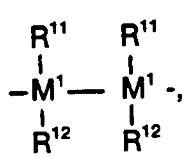

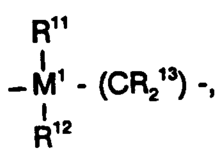

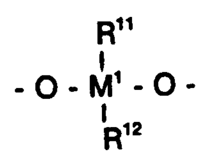

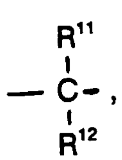

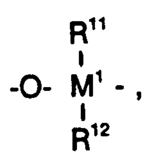

$=BR^{11}$, $=AlR^{11}$, -Ge-, -Sn-, -O-, -S-, =SO, $=SO_2$, $=NR^{11}$, =CO, $=PR^{11}$ oder $=P(O)R^{11}$ ist, wobei

$R^{11}$, $R^{12}$ und $R^{13}$ gleich oder verschieden sind und ein Wasserstoffatom, ein Halogenatom, eine $C_1$-$C_{10}$-Alkylgruppe, $C_1$-$C_{10}$-Fluoralkylgruppe, eine $C_6$-$C_{10}$-Arylgruppe, eine $C_6$-$C_{10}$-Fluorarylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden und $M^1$ Silizium, Germanium oder Zinn ist,

$R^8$ und $R^9$ gleich oder verschieden sind und die für $R^{11}$ genannte Bedeutung haben,

$R^{14}$ und $R^{15}$ gleich oder verschieden sind und einen ein- oder mehrkernigen Kohlenwasserstoffrest, welcher mit dem Zirkonatom eine Sandwichstruktur bilden kann, bedeuten und m und n gleich oder verschieden sind und null, 1 oder 2 sind, wobei m plus n null, 1 oder 2 ist.

**2.** Verfahren gemäß Anspruch 1, dadurch gekennzeichnet, daß in der Formel I $R^1$ und $R^2$ gleich oder verschieden sind und Methyl oder Chlor, $R^3$ und $R^4$ Wasserstoff, $R^5$ und $R^6$ gleich oder verschieden sind und Methyl, Ethyl oder Trifluormethyl, $R^7$ einen Rest

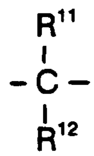 oder 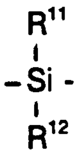

und n plus m null oder 1 bedeuten.

**3.** Verfahren gemäß Anspruch 1 oder 2, dadurch gekennzeichnet, daß als Verbindung der Formel I rac-Dimethylsilyl(2-methyl-1-indenyl)$_2$zirkondichlorid, rac-Ethylen(2-methyl-1-indenyl)$_2$zirkondichlorid, rac-Diphenylsilyl(2-methyl-1-indenyl)$_2$zirkondichlorid, rac-Methylethylen(2-methyl-1-indenyl)$_2$zirkondichlorid oder rac-Phenyl(methyl)silyl(2-methyl-1-indenyl)$_2$zirkondichlorid verwendet wird.

**4.** Verfahren gemäß einem oder mehreren der Ansprüche 1 bis 3, dadurch gekennzeichnet, daß in Formel Ia $R^1$ und $R^2$ gleich oder verschieden sind und Methyl oder Chlor,
$R^7$ einen Rest

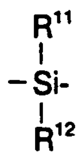, 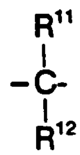 oder 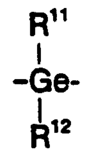,

n+m null oder 1 und
$R^{14}$ und $R^{15}$ gleich oder verschieden sind und Fluorenyl, Indenyl oder ein substituiertes Cyclopentadienyl bedeuten.

**5.** Verfahren gemäß einem oder mehreren der Ansprüche 1 bis 4, dadurch gekennzeichnet, daß als Verbindung der Formel Ia rac-Phenyl(methyl)silyl(indenyl)$_2$zirkondichlorid, Diphenylmethylen(9-fluorenyl)(cyclopentadienyl)zirkondichlorid, Isopropyliden(9-fluorenyl)(cyclopentadienyl)zirkondichlorid, rac-Dimethylsilyl(2,3,5-trimethyl-1-cyclpentadienyl)$_2$zirkondichlorid, rac-Dimethylsilyl(indenyl)$_2$zirkondichlorid, rac-Dimethylgermyl(indenyl)$_2$zirkondichlorid, rac-Dimethylsilyl(indenyl)$_2$zirkondimethyl, rac-Phenyl(vinyl)silyl(indenyl)$_2$zirkondichlorid,

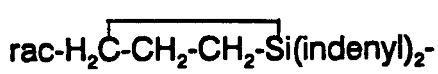

zirkondichlorid,

rac-Dimethylsilyl(2,4-dimethylcyclopentadienyl)$_2$zirkondichlorid, rac-Isopropyliden(indenyl)$_2$zirkondichlorid, rac-Dimethylsilyl(2-methyl-4,5,6,7-tetrahydro-1-indenyl)$_2$zirkondichlorid, rac-Ethylen(indenyl)$_2$zirkondichlorid, rac-Methylen(3-t-butyl-1-cyclopentadienyl)$_2$zirkondichlorid oder rac-Dimethylsilyl(4,7-dimethyl-1-indenyl)$_2$zirkondichlorid verwendet wird.

**6.** Verfahren gemäß einem oder mehreren der Ansprüche 1 bis 5, dadurch gekennzeichnet, daß Propylen polymerisiert wird.

7. Katalysator, welcher aus einer Übergangsmetallkomponente (Metallocen) und einem Aluminoxan der Formel II

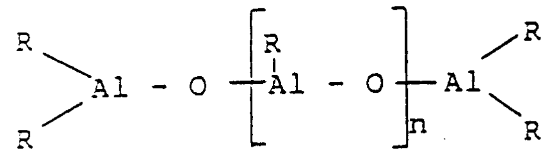

(II)

für den linearen Typ und/oder der Formel III

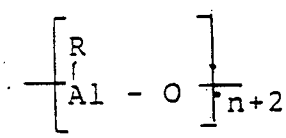

(III)

für den cyclischen Typ, wobei in den Formeln II und III die Reste R gleich oder verschieden sein können und eine $C_1$-$C_6$-Alkylgruppe, eine $C_1$-$C_6$-Fluoralkylgruppe, eine $C_6$-$C_{18}$-Arylgruppe, eine $C_1$-$C_6$-Fluorarylgruppe oder Wasserstoff bedeuten und n eine ganze Zahl von 0 bis 50 ist, oder anstelle des Aluminoxans aus einer Mischung eines Aluminoxans der Formel II und/oder der Formel III mit einer Verbindung $AlR_3$ besteht, dadurch gekennzeichnet, daß die Übergangsmetallkomponente mindestens ein Zirkonocen der Formel I und mindestens ein Zirkonocen der Formel Ia oder alternativ mindestens 2 Zirkonocene der Formel I enthält

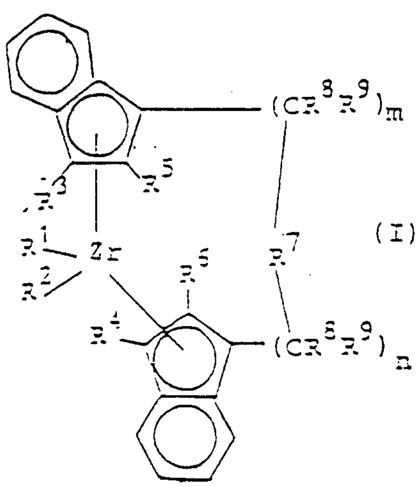

(I),

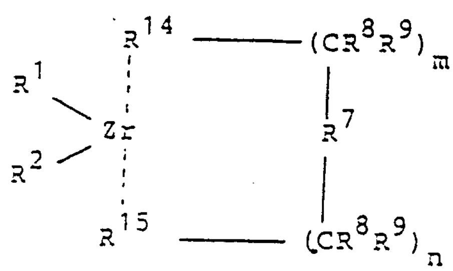

(Ia),

worin

| | |
|---|---|
| $R^1$ und $R^2$ | gleich oder verschieden sind und ein Wasserstoffatom, eine $C_1$-$C_{10}$-Alkylgruppe, eine $C_1$-$C_{10}$-Alkoxygruppe, eine $C_6$-$C_{10}$-Arylgruppe, eine $C_6$-$C_{10}$-Aryloxygruppe, eine $C_2$-$C_{10}$-Alkenylgruppe, eine $C_7$-$C_{40}$-Arylalkylgruppe, eine $C_7$-$C_{40}$-Alkylarylgruppe, eine $C_8$-$C_{40}$-Arylalkenylgruppe oder ein Halogenatom bedeuten, |
| $R^3$ und $R^4$ | gleich oder verschieden sind und ein Wasserstoffatom, ein Halogenatom, eine $C_1$-$C_{10}$-Alkylgruppe, die halogeniert sein kann, eine $C_6$-$C_{10}$-Arylgruppe, einen $-NR_2^{10}$, $-SR^{10}$, $-OSiR_3^{10}$, $-SiR_3^{10}$ oder $-PR_2^{10}$-Rest bedeuten, worin $R^{10}$ ein Halogenatom, eine $C_1$-$C_{10}$-Alkylgruppe oder eine $C_6$-$C_{10}$-Arylgruppe ist, |
| $R^5$ und $R^6$ | gleich oder verschieden sind und die für $R^3$ und $R^4$ genannte Bedeutung haben, mit der Maßgabe, daß $R^5$ und $R^6$ nicht Wasserstoff sind, |
| $R^7$ | |

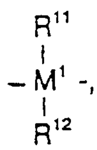 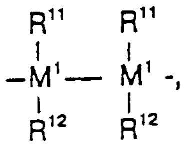 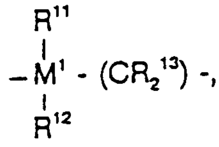 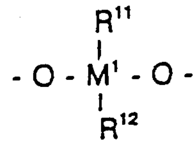

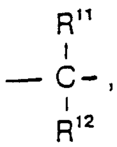 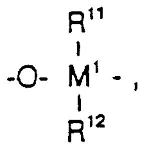

$=BR^{11}$, $=AlR^{11}$, -Ge-, Sn-, -O-, -S-, =SO, $=SO_2$, $=NR^{11}$, =CO, $=PR^{11}$, oder $=P(O)R^{11}$ ist, wobei

| | |
|---|---|
| $R^{11}$, $R^{12}$ und $R^{13}$ | gleich oder verschieden sind und ein Wasserstoffatom, ein Halogenatom, eine $C_1$–$C_{10}$-Alkylgruppe, $C_1$–$C_{10}$-Fluoralkylgruppe, eine $C_6$-$C_{10}$-Arylgruppe, eine $C_6$-$C_{10}$-Fluorarylgruppe, eine $C_1$–$C_{10}$-Alkoxygruppe, eine $C_2$-$C_{10}$-Alkenylgruppe, eine $C_7$–$C_{40}$-Arylalkylgruppe, eine $C_8$-$C_{40}$-Arylalkenylgruppe, eine $C_7$-$C_{40}$-Alkylarylgruppe bedeuten oder $R^{11}$ und $R^{12}$ oder $R^{11}$ und $R^{13}$ jeweils mit den sie verbindenden Atomen einen Ring bilden und $M^1$ Silizium, Germanium oder Zinn ist, |
| $R^8$ und $R^9$ | gleich oder verschieden sind und die für $R^{11}$ genannte Bedeutung haben, |
| $R^{14}$ und $R^{15}$ | gleich oder verschieden sind und einen ein- oder mehrkernigen Kohlenwasserstoffrest, welcher mit dem Zirkonatom eine Sandwichstruktur bilden kann, bedeuten und m und n gleich oder verschieden sind und null, 1 oder 2 sind, wobei m plus n null, 1 oder 2 ist. |

8. Katalysator gemäß Anspruch 7, dadurch gekennzeichnet, daß in der Formel I $R^1$ und $R^2$ gleich oder verschieden sind und Methyl oder Chlor, $R^3$ und $R^4$ Wasserstoff, $R^5$ und $R^6$ gleich oder verschieden sind und Methyl, Ethyl oder Trifluormethyl, $R^7$ einen Rest

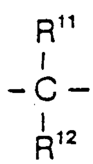 oder 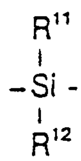

und n plus m null oder 1 bedeuten.

9. Katalysator gemäß Anspruch 7 oder 8, dadurch gekennzeichnet, daß als Verbindung der Formel I rac-Dimethylsilyl(2-methyl-1-indenyl)$_2$zirkondichlorid, rac-Ethylen(2-methyl-1-indenyl)$_2$zirkondichlorid, rac-Diphenylsilyl(2-methyl-1-indenyl)$_2$zirkondichlorid, rac-Methylethylen(2-methyl-1-indenyl)$_2$zirkondichlorid oder rac-Pheny(methyl)silyl(2-methyl-1-indenyl)$_2$zirkondichlorid erhalten ist.

10. Katalysator gemäß einem oder mehreren der Ansprüche 7 bis 9, dadurch gekennzeichnet, daß in Formel Ia $R^1$ und $R^2$ gleich oder verschieden sind und Methyl oder Chlor,

$R^7$ einen Rest

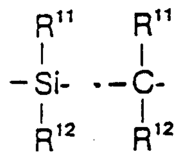 oder 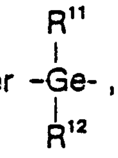

n+m null oder 1 und
$R^{14}$ und $R^{15}$ gleich oder verschieden sind und Fluorenyl, Indenyl oder ein substituiertes Cyclopentadienyl bedeuten.

**11.** Katalysator gemäß einem oder mehreren der Ansprüche 7 bis 10, dadurch gekennzeichnet, daß als Verbindung der Formel Ia rac-Phenyl(methyl)silyl(indenyl)$_2$zirkondichlorid, Diphenylmethylen(9-fluorenyl)(cyclopentadienyl)zirkondichlorid, Isopropyliden(9-fluorenyl)(cyclopentadienyl)zirkondichlorid, rac-Dimethylsilyl(2,3,5-trimethyl-1-cyclpentadienyl)$_2$zirkondichlorid, rac-Dimethylsilyl(indenyl)$_2$zirkondichlorid, rac-Dimethylgermyl(indenyl)$_2$zirkondichlorid, rac-Dimethylsilyl(indenyl)$_2$zirkondimethyl,

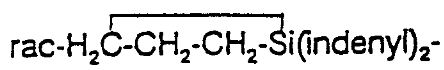

zirkondichlorid,

rac-Phenyl(vinyl)silyl(indenyl)$_2$zirkondichlorid, rac-Dimethylsilyl(2,4-dimethylcyclopentadienyl)$_2$zirkondlchlorid rac-Isopropyliden(indenyl)$_2$zirkondichlorid, rac-Dimethylsilyl(2-methyl-4,5,6,7-tetrahydro-1-indenyl)$_2$zirkondichlorid, rac-Ethylen(indenyl)$_2$zirkondichlorid, rac-Methylen(3-t-butyl-1-cyclopentadienyl)$_2$zirkondichlorid oder rac-Dimethylsilyl(4,7-dimethyl-1-indenyl)$_2$zirkondichlorid enthalten ist.

**12.** Katalysator gemäß einem oder mehreren der Ansprüche 7 - 11, worin die Metallocene auf einen Träger aufgebracht sind.

**13.** Katalysator gemäß einem oder mehreren der Ansprüche 7 - 12, worin die Metallocene vorpolymerisiert sind.

**14.** Verwendung eines Katalysators gemäß einem oder mehreren der Ansprüche 7 bis 13 zur Polymerisation oder Copolymerisation eines Olefins der Formel $R^aCH = CHR^b$, worin $R^a$ und $R^b$ gleich oder verschieden sind und ein Wasserstoffatom oder einen Alkylrest mit 1 bis 14 C-Atomen bedeuten oder $R^a$ und $R^b$ mit den sie verbindenden Atomen einen Ring bilden können.

## Claims

**1.** A process for the preparation of a polyolefin which has a molecular weight distribution $M_w/M_n$ of $\geqq 3.0$ and which may be monomodal, bimodal or multimodal, by polymerization or copolymerization of an olefin of the formula $R^aCH=CHR^b$ in which $R^a$ and $R^b$ are identical or different and are a hydrogen atom or an alkyl radical having 1 to 14 carbon atoms, or $R^a$ and $R^b$, together with the atoms connecting them, can form a ring, at a temperature of from -60 to 200°C, at a pressure of from 0.5 to 100 bar, in solution, in suspension or in the gas phase, in the presence of a catalyst comprising a transition-metal component (metallocene) and an aluminoxane of the formula II

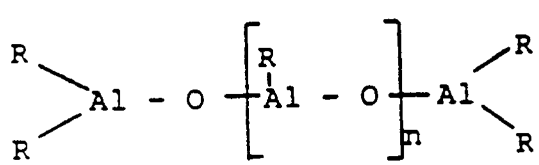

(II)

for the linear type and/or of the formula III

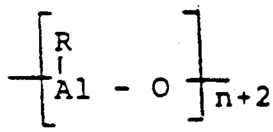

(III)

for the cyclic type, where, in the formulae II and III, the radicals R may be identical or different and are a $C_1$-$C_6$-alkyl group, a $C_1$-$C_6$-fluoroalkyl group, a $C_6$-$C_{18}$-aryl group, a $C_1$-$C_6$-fluoroaryl group or hydrogen, and n is an integer from 0 to 50, or, instead of the aluminoxane, comprising a mixture of an aluminoxane of the formula II and/or of the formula III with a compound $AlR_3$, which comprises using, as the transition-metal component, at least one zirconocene of the formula I and at least one zirconocene of the formula Ia or alternatively at least 2 zirconocenes of the formula I

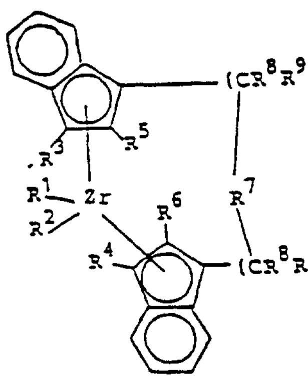

(I),

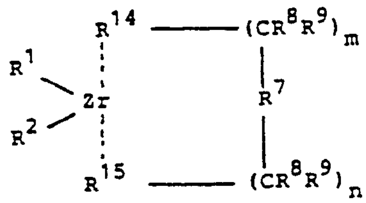

(Ia),

in which

$R^1$ and $R^2$ are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom,

$R^3$ and $R^4$ are identical or different and are a hydrogen atom, a halogen atom, a $C_1$-$C_{10}$-alkyl group, which may be halogenated, a $C_6$-$C_{10}$-aryl group, or an $-NR_2^{10}$, $-SR^{10}$, $-OSiR_3^{10}$, $-SiR_3^{10}$ or $-PR_2^{10}$ radical, in which $R^{10}$ is a halogen atom, a $C_1$-$C_{10}$-alkyl group or a $C_6$-$C_{10}$-aryl group,

$R^5$ and $R^6$ are identical or different and are as defined for $R^3$ and $R^4$, with the proviso that $R^5$ and $R^6$ are not hydrogen,

$R^7$ is

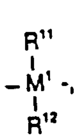

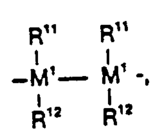

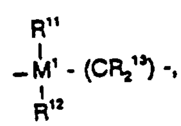

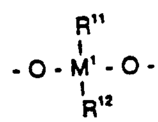

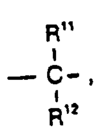

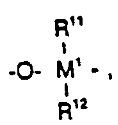

$=BR^{11}$, $=AlR^{11}$, -Ge-, -Sn-, -O-, -S-, =SO, $=SO_2$, $=NR^{11}$, =CO, $=PR^{11}$ or $=P(O)R^{11}$, where

$R^{11}$, $R^{12}$ and $R^{13}$ are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-

$C_{40}$-alkylaryl group, or $R^{11}$ and $R^{12}$ or $R^{11}$ and $R^{13}$, in each case together with the atoms connecting them, form a ring, and
$M^1$ is silicon, germanium or tin,

| | |
|---|---|
| $R^8$ and $R^9$ | are identical or different and are as defined for $R^{11}$, |
| $R^{14}$ and $R^{15}$ | are identical or different and are a monocyclic or polycyclic hydrocarbon radical which can form a sandwich structure together with the zirconium atom, and |
| m and n | are identical or different and are zero, 1 or 2, where m plus n is zero, 1 or 2. |

**2.** The process as claimed in claim 1, wherein, in the formula I, $R^1$ and $R^2$ are identical or different and are methyl or chlorine, $R^3$ and $R^4$ are hydrogen, $R^5$ and $R^6$ are identical or different and are methyl, ethyl or trifluoromethyl, $R^7$ is a

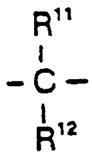 or 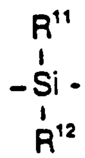

radical,
and n plus m is zero or 1.

**3.** The process as claimed in claim 1 or 2, wherein the compound of the formula I is rac-dimethylsilyl(2-methyl-1-indenyl)$_2$zirconium dichloride, rac-ethylene(2-methyl-1-indenyl)$_2$zirconium dichloride, rac-diphenylsilyl(2-methyl-1-indenyl)$_2$zirconium dichloride, rac-methylethylene(2-methyl-1-indenyl)$_2$zirconium dichloride or rac-phenyl(methyl)silyl(2-methyl-1-indenyl)$_2$zirconium dichloride.

**4.** The process as claimed in one or more of claims 1 to 3, wherein, in formula Ia, $R^1$ and $R^2$ are identical or different and are methyl or chlorine,
$R^7$ is a

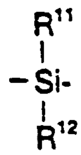, 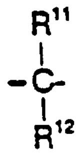 or 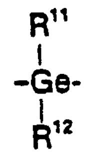

radical,
n + m is zero or 1 and $R^{14}$ and $R^{15}$ are identical or different and are fluorenyl, indenyl or a substituted cyclopentadienyl.

**5.** The process as claimed in one or more of claims 1 to 4, wherein the compound of the formula Ia is rac-phenyl(methyl)silyl(indenyl)$_2$zirconium dichloride, diphenylmethylene(9-fluorenyl) (cyclopentadienyl)zirconium dichloride, isopropylidene(9-fluorenyl)(cyclopentadienyl)zirconium dichloride, rac-dimethylsilyl(2,3,5-trimethyl-1-cyclopentadienyl)$_2$zirconium dichloride, rac-dimethylsilyl(indenyl)$_2$zirconium dichloride, rac-dimethylgermyl(indenyl)$_2$zirconium dichloride, rac-dimethylsilyl(indenyl)$_2$dimethylzirconium,rac-phenyl(vinyl)silyl(indenyl)$_2$zirconium dichloride,

rac-$H_2C-CH_2-CH_2-Si$-(indenyl)$_2$zirconium dichloride,

rac-dimethylsilyl-(2,4-dimethylcyclopentadienyl)$_2$zirconium dichloride, rac-isopropylidene(indenyl)$_2$zirconium dichloride, rac-dimethylsilyl(2-methyl-4,5,6,7-tetrahydro-1-indenyl)$_2$zirconium dichloride, rac-ethylene(indenyl)$_2$zirconium dichloride, rac-methylene(3-t-butyl-1-cyclopentadienyl)$_2$zirconium dichloride or rac-dimethylsilyl(4,7-dimethyl-1-indenyl)$_2$zirconium dichloride.

**6.** The process as claimed in one or more of claims 1 to 5, wherein propylene is polymerized.

**7.** A catalyst comprising a transition-metal component (metallocene) and an aluminoxane of the formula II

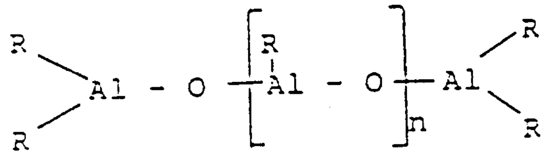

(II)

for the linear type and/or of the formula III

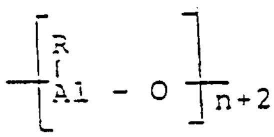

(III)

for the cyclic type, where, in the formulae II and III, the radicals R may be identical or different and are a $C_1$-$C_6$-alkyl group, a $C_1$-$C_6$-fluoroalkyl group, a $C_6$-$C_{18}$-aryl group, a $C_1$-$C_6$-fluoroaryl group or hydrogen, and n is an integer from 0 to 50, or, instead of the aluminoxane, comprising a mixture of an aluminoxane of the formula II and/or of the formula III with a compound $AlR_3$, wherein the transition-metal component comprises at least one zirconocene of the formula I and at least one zirconocene of the formula Ia or alternatively at least 2 zirconocenes of the formula I

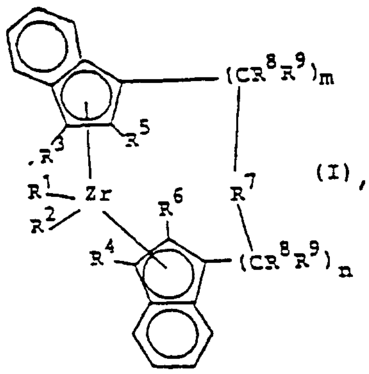

(I),

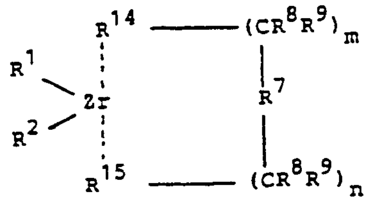

(Ia),

in which

| | |
|---|---|
| $R^1$ and $R^2$ | are identical or different and are a hydrogen atom, a $C_1$-$C_{10}$-alkyl group, a $C_1$-$C_{10}$-alkoxy group, a $C_6$-$C_{10}$-aryl group, a $C_6$-$C_{10}$-aryloxy group, a $C_2$-$C_{10}$-alkenyl group, a $C_7$-$C_{40}$-arylalkyl group, a $C_7$-$C_{40}$-alkylaryl group, a $C_8$-$C_{40}$-arylalkenyl group or a halogen atom, |
| $R^3$ and $R^4$ | are identical or different and are a hydrogen atom, a halogen atom, a $C_1$-$C_{10}$-alkyl group, which may be halogenated, a $C_6$-$C_{10}$-aryl group, or an $-NR_2^{10}$, $-SR^{10}$, $-OSiR_3^{10}$, $-SiR_3^{10}$ or $-PR_2^{10}$ radical, in which $R^{10}$ is a halogen atom, a $C_1$-$C_{10}$-alkyl group or a $C_6$-$C_{10}$-aryl group, |
| $R^5$ and $R^6$ | are identical or different and are as defined for $R^3$ and $R^4$, with the proviso that $R^5$ and $R^6$ are not hydrogen, |

$R^7$ is

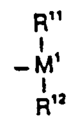 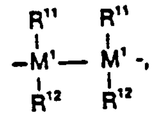 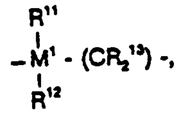 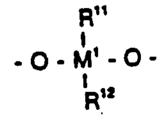

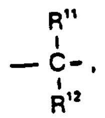 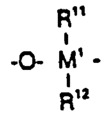

| | |
|---|---|
| | $=BR^{11}$ $=AlR^{11}$, -Ge-, -Sn-, -O-, -S-, =SO, $=SO_2$, $=NR^{11}$, =CO, $=PR^{11}$ or $=P(O)R^{11}$, where |
| $R^{11}$, $R^{12}$ and $R^{13}$ | are identical or different and are a hydrogen atom, a halogen atom, a $C_1$-$C_{10}$-alkyl group, a $C_1$-$C_{10}$-fluoroalkyl group, a $C_6$-$C_{10}$-aryl group, a $C_6$-$C_{10}$-fluoroaryl group, a $C_1$-$C_{10}$-alkoxy group, a $C_2$-$C_{10}$-alkenyl group, a $C_7$-$C_{40}$-arylalkyl group, a $C_8$-$C_{40}$-arylalkenyl group or a $C_7$-$C_{40}$-alkylaryl group, or $R^{11}$ and $R^{12}$ or $R^{11}$ and $R^{13}$, in each case together with the atoms connecting them, form a ring, and $M^1$ is silicon, germanium or tin, |
| $R^8$ and $R^9$ | are identical or different and are as defined for $R^{11}$, |
| $R^{14}$ and $R^{15}$ | are identical or different and are a monocyclic or polycyclic hydrocarbon radical which can form a sandwich structure together with the zirconium atom, and |
| m and n | are identical or different and are zero, 1 or 2, where m plus n is zero, 1 or 2. |

**8.** A catalyst as claimed in claim 7, wherein, in the formula I, $R^1$ and $R^2$ are identical or different and are methyl or chlorine, $R^3$ and $R^4$ are hydrogen, $R^5$ and $R^6$ are identical or different and are methyl, ethyl or trifluoromethyl, $R^7$ is a

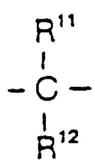 or 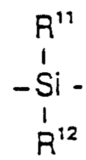

radical,
and n plus m is zero or 1.

**9.** A catalyst as claimed in claim 7 or 8, wherein the compound of the formula I is rac-dimethylsilyl(2-methyl-1-indenyl)$_2$zirconium dichloride, rac-ethylene(2-methyl-1-indenyl)$_2$zirconium dichloride, rac-diphenylsilyl(2-methyl-1-indenyl)$_2$zirconium dichloride, rac-methylethylene(2-methyl-1-indenyl)$_2$zirconium dichloride or rac-phenyl(methyl)silyl(2-methyl-1-indenyl)$_2$zirconium dichloride.

**10.** A catalyst as claimed in one or more of claims 7 to 9, wherein, in formula Ia, $R^1$ and $R^2$ are identical or different and are methyl or chlorine,
$R^7$ is a

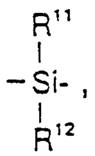 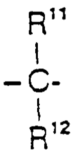 or 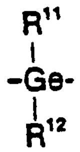

radical,
n + m is zero or 1 and $R^{14}$ and $R^{15}$ are identical or different and are fluorenyl, indenyl or a substituted cyclopentadienyl.

11. A catalyst as claimed in one or more of claims 7 to 10, wherein the compound of the formula Ia is rac-phenyl(methyl)silyl(indenyl)$_2$zirconium dichloride, diphenylmethylene(9-fluorenyl) (cyclopentadienyl)zirconium dichloride, isopropylidene(9-fluorenyl)(cyclopentadienyl)zirconium dichloride, rac-dimethylsilyl(2,3,5-trimethyl-1-cyclopentadienyl)$_2$zirconium dichloride, rac-dimethylsilyl(indenyl)$_2$zirconium dichloride, rac-dimethylgermyl(indenyl)$_2$zirconium dichloride, rac-dimethylsilyl(indenyl)$_2$dimethylzirconium, rac-phenyl(vinyl)silyl(indenyl)$_2$zirconium dichloride,

rac-$H_2C-CH_2-CH_2-Si$-

(indenyl)$_2$zirconiumdichloride,

rac-dimethylsilyl (2,4-dimethylcyclopentadienyl)$_2$zirconium dichloride, rac-isopropylidene(indenyl)$_2$zirconium dichloride, rac-dimethylsilyl(2-methyl-4,5,6,7-tetrahydro-1-indenyl)$_2$zirconium dichloride, rac-ethylene (indenyl)$_2$zirconium dichloride, rac-methylene(3-t-butyl-1-cyclopentadienyl)$_2$zirconium dichloride or rac-dimethylsilyl(4,7-dimethyl-1-indenyl)$_2$zirconium dichloride.

12. A catalyst as claimed in one or more of claims 7 - 11, in which the metallocenes are applied to a carrier.

13. A cataylst as claimed in one or more of claims 7 - 12, in which the metallocenes are prepolymerized.

14. The use of a catalyst as claimed in one or more of claims 7 to 13 for the polymerization or copolymerization of an olefin of the formula $R^aCH = CHR^b$, in which $R^a$ and $R^b$ are identical or different and are a hydrogen atom or an alkyl radical having 1 to 14 carbon atoms, or $R^a$ and $R^b$, together with the atoms connecting them, can form a ring.

## Revendications

1. Procédé pour la préparation d'une polyoléfine ayant une distribution de masse moléculaire $M_w/M_n \geqq 3{,}0$ qui peut être monomodale, bimodale ou multimodale, par polymérisation ou copolymérisation d'une oléfine de formule $R^aCH=CHR^b$, dans laquelle $R^a$ et $R^b$ sont identiques ou différents et représentent un atome d'hydrogène ou un radical alkyle comportant de 1 à 14 atomes de carbone, ou $R^a$ et $R^b$ avec les atomes qui les relient peuvent former un cycle, à une température de -60 à 200 °C, sous une pression de 0,5 à 100 bar, en solution, en suspension ou en phase gazeuse, en présence d'un catalyseur composé d'un composant à métal de transition (métallocène) et d'un aluminoxane de formule II :

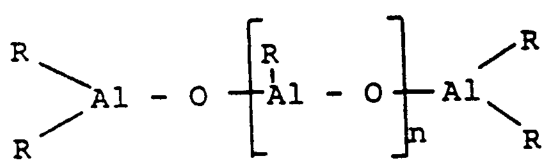

(II)

pour le type linéaire, et/ou de formule III :

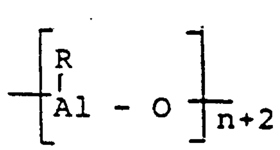

(III)

pour le type cyclique, dans les formules II et III, les radicaux R pouvant être identiques ou différents et représenter un groupe alkyle en $C_1$-$C_6$, un groupe fluoroalkyle en $C_1$-$C_6$, un groupe aryle en $C_6$-$C_{18}$, un groupe fluoraryle en $C_1$-$C_6$ ou l'hydrogène et n est un nombre entier de 1 à 50, ou, au lieu de l'aluminoxane, composé d'un mélange d'un aluminoxane de formule II et/ou de formule III avec un composé $AlR_3$, caractérisé en ce qu'en tant que constituant

à métal de transition on utilise au moins un zirconocène de formule I et au moins un zirconocène de formule Ia ou, alternativement, au moins deux zirconocènes de formule I :

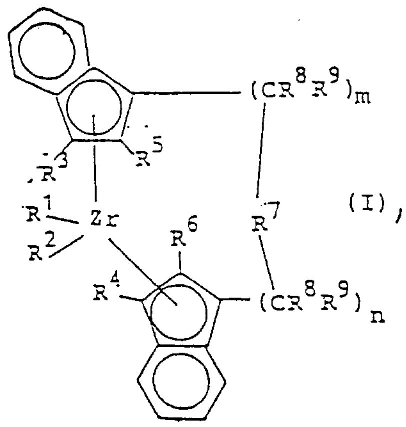

(I),

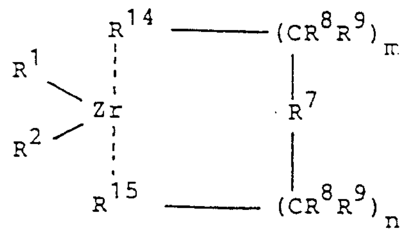

(Ia)

où

$R^1$ et $R^2$ sont identiques ou différents et représentent un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène,

$R^3$ et $R^4$ sont identiques ou différents et représentent un atome d'hydrogène, un atome d'halogène, un groupe alkyle en $C_1$-$C_{10}$ qui peut être halogéné, un groupe aryle en $C_6$-$C_{10}$, un radical $-NR_2^{10}$, $-SR^{10}$, $-OSiR_3^{10}$, $-SiR_3^{10}$ ou $-PR_2^{10}$, où $R^{10}$ représente un atome d'halogène, un groupe alkyle en $C_1$-$C_{10}$ ou un groupe aryle en $C_6$-$C_{10}$,

$R^5$ et $R^6$ sont identiques ou différents et ont les significations citées pour $R^3$ et $R^4$ à la condition que $R^5$ et $R^6$ ne soient pas l'hydrogène,

$R^7$

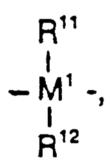 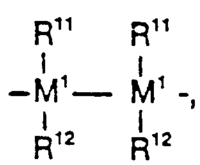 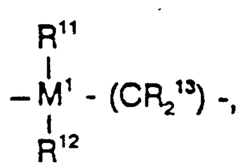 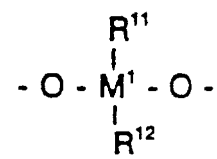

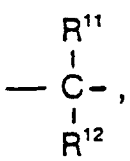 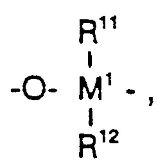

$=BR^{11}$, $=AlR^{11}$, -Ge-, -Sn-, -O-, -S-, =SO, $=SO_2$, $=NR^{11}$, =CO $=PR^{11}$ ou $=P(O)R^{11}$

où

$R^{11}$, $R^{12}$ et $R^{13}$ sont identiques ou différents et représentent un atome d'hydrogène, un atome d'halogène, un groupe alkyle en $C_1$-$C_{10}$, un groupe fluoralkyle en $C_1$-$C_{10}$, un groupe aryle en $C_6$-$C_{10}$, un groupe fluoraryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, un groupe alkylaryle en $C_7$-$C_{40}$, ou $R^{11}$ et $R^{12}$ ou $R^{11}$ et $R^{13}$ chacun avec l'atome qui les relie forment un cycle et

$M^1$ est le silicium, le germanium ou l'étain,

$R^8$ et $R^9$ sont identiques ou différents et ont la signification donnée pour $R^{11}$,

$R^{14}$ et $R^{15}$ sont identiques ou différents et représentent un radical hydrocarboné mono- ou multinucléé qui peut former avec l'atome de zirconium une structure sandwich, et

m et n sont identiques ou différents et valent 0, 1 ou 2, m plus n valant 0, 1 ou 2.

2. Procédé selon la revendication 1, caractérisé en ce que dans la formule I, $R^1$ et $R^2$ sont identiques ou différents et représentent le méthyle ou le chlore, $R^3$ et $R^4$ représentent l'hydrogène, $R^5$ et $R^6$ sont identiques ou différents et représentent méthyle, éthyle ou trifluorométhyle, $R^7$ représente un radical

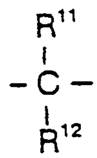 ou 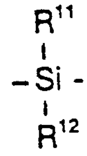

et n plus m valent 0 ou 1.

3. Procédé selon la revendication 1 ou 2, caractérisé en ce que l'on utilise en tant que composés de formule I le dichlorure de rac-diméthylsilyl(2-méthyl-1-indényl)$_2$zirconium, le dichlorure de rac-éthylène(2-méthyl-1-indényl)$_2$zirconium, le dichlorure de rac-diphénylsilyl-(2-méthyl-1-indényl)$_2$zirconium, le dichlorure de rac-méthyl-éthylène(2-méthyl-1-indényl)$_2$zirconium et le dichlorure de rac-phényl(méthyl)silyl(2-méthyl-1-indényl)$_2$zirconium.

4. Procédé selon une ou plusieurs des revendications 1 à 3, caractérisé en ce que dans la formule Ia $R^1$ et $R^2$ sont identiques ou différents et représentent méthyle ou le chlore,
$R^7$ représente un radical

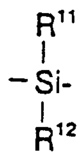, 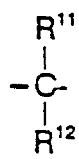 ou 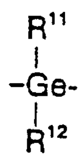,

n + m valent 0 ou 1 et
$R^{14}$ et $R^{15}$ sont identiques ou différents et représentent fluorényle, indényle et un cyclopentadiényle substitué.

5. Procédé selon une ou plusieurs des revendications 1 à 4, caractérisé en ce que l'on utilise en tant que composé de formule Ia le dichlorure de rac-phényl(méthyl)silyl(indényl)$_2$zirconium, le dichlorure de diphénylméthylène(9-fluorényl)(cyclopentadiényl)zirconium, le dichlorure d'isopropylidène(9-fluorényl)(cyclopentadiényl)zirconium, le dichlorure de rac-diméthylsilyl(2,3,5-triméthyl-1-cyclopentadiényl)$_2$zirconium, le dichlorure de rac-diméthylsilyl(indényl)$_2$zirconium, le dichlorure de rac-diméthylgermyl(indényl)$_2$zirconium, le rac-diméthylsilyl(indényl)$_2$zirconiumdiméthyle, le dichlorure de rac-phényl (vinyl) silyl(indényl)$_2$zirconium, le dichlorure de

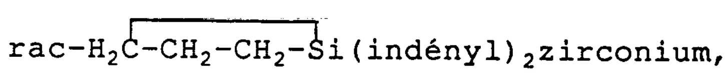

le dichlorure de rac-diméthylsilyl(2,4-diméthylcyclo-pentadiényl)$_2$zirconium, le dichlorure de rac-isopropylidène(indényl)$_2$zirconium, le dichlorure de rac-diméthylsilyl(2-méthyl-4,5,6,7-tétrahydro-1-indényl)$_2$-zirconium, le dichlorure de rac-éthylène-(indényl)$_2$zirconium, le dichlorure de rac-méthylène(3-t-butyl-1-cyclopentadiényl)$_2$zirconium ou le dichlorure de rac-diméthylsilyl(4,7-diméthyl-1-indényl)$_2$zirconium.

6. Procédé selon une ou plusieurs des revendications 1 à 5, caractérisé en ce que l'on polymérise le propylène.

**7.** Catalyseur composé d'un composant à métal de transition (métallocène) et d'un aluminoxane de formule II :

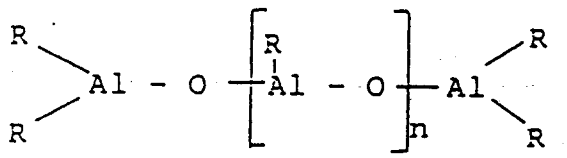

(II)

pour le type linéaire, et/ou de formule III :

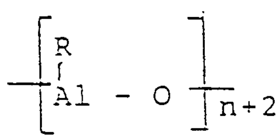

(III)

pour le type cyclique, dans les formules II et III, les radicaux R pouvant être identiques ou différents et représenter un groupe alkyle en $C_1$-$C_6$, un groupe fluoroalkyle en $C_1$-$C_6$, un groupe aryle en $C_6$-$C_{18}$, un groupe fluoraryle en $C_1$-$C_6$ ou l'hydrogène et n est un nombre entier de 0 à 50, ou au lieu de l'aluminoxane composé d'un mélange d'un aluminoxane de formule II et/ou de formule III avec un composé $AlR_3$, caractérisé en ce que le constituant à métal de transition contient au moins un zirconocène de formule I et au moins un zirconocène de formule Ia ou, alternativement, au moins deux zirconocènes de formule I :

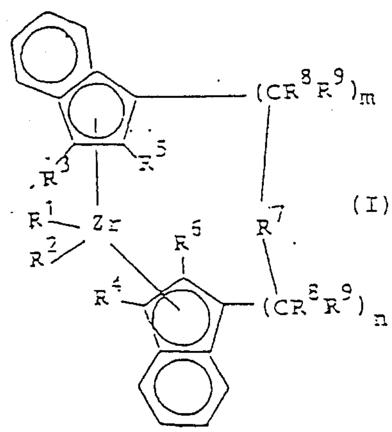

(I),

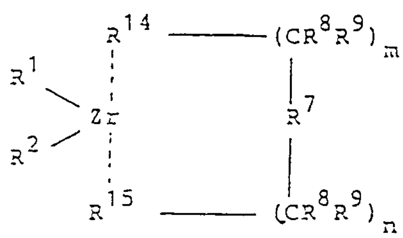

(Ia)

où

$R^1$ et $R^2$ sont identiques ou différents et représentent un atome d'hydrogène, un groupe alkyle en $C_1$-$C_{10}$, un groupe alcoxy en $C_1$-$C_{10}$, un groupe aryle en $C_6$-$C_{10}$, un groupe aryloxy en $C_6$-$C_{10}$, un groupe alcényle en $C_2$-$C_{10}$, un groupe arylalkyle en $C_7$-$C_{40}$, un groupe alkylaryle en $C_7$-$C_{40}$, un groupe arylalcényle en $C_8$-$C_{40}$ ou un atome d'halogène,
$R^3$ et $R^4$ sont identiques ou différents et représentent un atome d'hydrogène, un atome d'halogène, un groupe alkyle en $C_1$-$C_{10}$ qui peut être halogéné, un groupe aryle en $C_6$-$C_{10}$, un radical $-NR_2^{10}$, $-SR^{10}$, $-OSiR_3^{10}$, $-SiR_3^{10}$ ou $-PR_2^{10}$, où $R^{10}$ représente un atome d'halogène, un groupe alkyle en $C_1$-$C_{10}$ ou un groupe aryle en $C_6$-$C_{10}$,
$R^5$ et $R^6$ sont identiques ou différents et ont les significations citées pour $R^3$ et $R^4$ à la condition que $R^5$ et $R^6$ ne soient pas l'hydrogène,

$R^7$

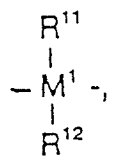, 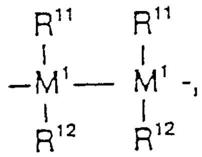, 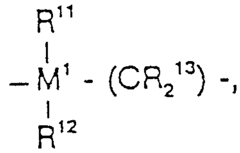, 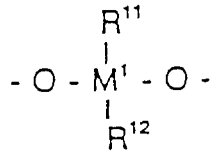

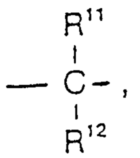, 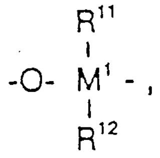,

$=BR^{11}$, $=AlR^{11}$, -Ge-, -Sn-, -O-, -S-, =SO, $=SO_2$, $=NR^{11}$, =CO, $=PR^{11}$ ou $=P(O)R^{11}$

où

$R^{11}$, $R^{12}$ et $R^{13}$ sont identiques ou différents et représentent un atome d'hydrogène, un atome d'halogène, un groupe alkyle en $C_1$-$C_{10}$, un groupe fluoralkyle en $C_1$-$C_{10}$, un groupe aryle en $C_6$-$C_{10}$, un groupe fluoraryle en $C_6$-$C_{10}$, un groupe alcoxy en $C_1$-$C_{10}$, un groupe alcényle en $C_2$-$C_{10}$, un groupe arylalkyle en $C_7$-$C_{40}$, un groupe arylalcényle en $C_8$-$C_{40}$, un groupe alkylaryle en $C_7$-$C_{40}$, ou $R^{11}$ et $R^{12}$ ou $R^{11}$ et $R^{13}$ chacun avec les atomes qui les relient forment un cycle et

$M^1$ est le silicium, le germanium ou l'étain,

$R^8$ et $R^9$ sont identiques ou différents et ont la signification donnée pour $R^{11}$,

$R^{14}$ et $R^{15}$ sont identiques ou différents et représentent un radical hydrocarboné mono- ou multinucléé qui peut former avec l'atome de zirconium une structure sandwich, et

m et n sont identiques ou différents et valent 0, 1 ou 2, m plus n valant 0, 1 ou 2.

**8.** Catalyseur selon la revendication 7, caractérisé en ce que dans la formule I $R^1$ et $R^2$ sont identiques ou différents et représentent méthyle ou le chlore, $R^3$ et $R^4$ représentent l'hydrogène, $R^5$ et $R^6$ sont identiques ou différents et représentent méthyle, éthyle ou trifluorométhyle, $R^7$ représente un radical

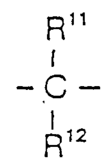 ou 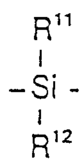

et n plus m valent 0 ou 1.

**9.** Catalyseur selon la revendication 7 ou 8, caractérisé en ce qu'il contient en tant que composés de formule I le dichlorure de rac-diméthylsilyl(2-méthyl-1-indényl)$_2$zirconium, le dichlorure de rac-éthylène(2-méthyl-1-indényl)$_2$zirconium, le dichlorure de rac-diphénylsilyl(2-méthyl-1-indényl)$_2$zirconium, le dichlorure de rac-méthyléthylène(2-méthyl-1-indényl)$_2$zirconium et le dichlorure de rac-phényl(méthyl)silyl(2-méthyl-1-indényl)$_2$zirconium.

**10.** Catalyseur selon une ou plusieurs des revendications 7 à 9, caractérisé en ce que dans la formule la $R^1$ et $R^2$ sont identiques ou différents et représentent méthyle ou le chlore,

$R^7$ représente un radical

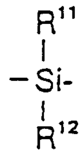 , 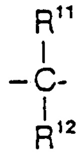 ou 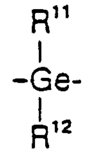 ,

n + m valent 0 ou 1 et
$R^{14}$ et $R^{15}$ sont identiques ou différents et représentent fluorényle, indényle et un cyclopentadiényle substitué.

11. Catalyseur selon une ou plusieurs des revendications 7 à 10, caractérisé en ce que l'on utilise en tant que composé de formule Ia le dichlorure de rac-phényl(méthyl)silyl(indényl)$_2$zirconium, le dichlorure de diphénylméthylène(9-fluorényl)(cyclopentadiényl)zirconium, le dichlorure d'isopropylidène(9-fluorényl)(cyclopentadiényl)zirconium, le dichlorure de rac-diméthylsilyl(2,3,5-triméthyl-1-cyclopentadiényl)$_2$zirconium, le dichlorure de rac-diméthylsilyl(indényl)$_2$zirconium, le dichlorure de rac-diméthylgermyl(indényl)$_2$zirconium, le rac-diméthylsilyl(indényl)$_2$zirconiumdiméthyle, le dichlorure de rac-phényl (vinyl) silyl (indényl)$_2$zirconium, le dichlorure de

$$\text{rac-}H_2C\text{-}CH_2\text{-}CH_2\text{-}Si\text{(indényl)}_2\text{zirconium,}$$

le dichlorure de rac-diméthylsilyl(2,4-diméthylcyclopentadiényl)$_2$-zirconium, le dichlorure de rac-isopropylidène(indényl)$_2$zirconium, le dichlorure de rac-diméthylsilyl(2-méthyl-4,5,6,7-tétrahydro-1-indényl)$_2$zirconium, le dichlorure de rac-éthylène(indényl)$_2$zirconium, le dichlorure de rac-méthylène(3-t-butyl-1-cyclopentadiényl)$_2$zirconium, le dichlorure de rac-diméthylsilyl (4,7-diméthyl-1-indényl)$_2$zirconium.

12. Catalyseur selon une ou plusieurs des revendications 7 à 11 où les métallocènes sont déposés sur un support.

13. Catalyseur selon une ou plusieurs des revendications 7 à 12 où on polymérise préalablement les métallocènes.

14. Utilisation d'un catalyseur selon une ou plusieurs des revendications 7 à 13 pour la polymérisation ou copolymérisation d'une oléfine de formule $R^aCH=CHR^b$, dans laquelle $R^a$ et $R^b$ sont identiques ou différents et représentent un atome d'hydrogène ou un radical alkyle comportant de 1 à 14 atomes de carbone, ou $R^a$ et $R^b$ peuvent former un cycle avec les atomes qui les relient.